# EUROPEAN PATENT APPLICATION

(11) **EP 4 712 619 A1**
(43) Date of publication of application: **18.03.2026**
(21) Application number: 23936005.0
(22) Date of filing: 08.05.2023
(51) Int. Cl.: H04W 72/0446

(54) **SENDING DETERMINATION METHOD AND APPARATUS, SENDING INDICATION METHOD AND APPARATUS, COMMUNICATION APPARATUS, AND STORAGE MEDIUM**

(71) Applicant: Beijing Xiaomi Mobile Software Co., Ltd., Beijing 100085 (CN)
(72) Inventor: WANG, Lei, Beijing 100085 (CN)
(74) Representative: Hersina, Günter
(86) International application number: PCT/CN2023/092851
(87) International publication number: WO 2024/229677

(57) **Abstract**

The present disclosure relates to the technical field of communications, and in particular to a sending determination, sending indication method and apparatus, a communication apparatus, and a storage medium. A sending determination method comprises: according to first information sent by a network device, determining a symbol capable of being used for sending a physical uplink shared channel (PUSCH) transmitted in a plurality of slots, wherein the symbol comprises at least one of the following: a sub-band full duplex (SBFD) symbol and a non-SBFD symbol. According to the present disclosure, a terminal can determine, according to the first information, the symbol capable of being used for sending the PUSCH transmitted in the plurality of slots. Therefore, it can be ensured that the symbol determined by the terminal and capable of being used for sending the PUSCH transmitted in the plurality of slots is consistent with the understanding of the network device, thereby ensuing the communication quality between the network device and the terminal.

## Description

### TECHNICAL FIELD

This disclosure relates to the field of communication technology, and in particular, to a method for determining transmission, a method for indicating transmission, an apparatus for determining transmission, an apparatus for indicating transmission, a communication device, and a computer-readable storage medium.

### BACKGROUND

A network device may send physical uplink shared channel (PUSCH) in multiple slots to a terminal. However, this may cause problems in some communication scenarios.

### SUMMARY

The embodiments of the disclosure provide a method for determining transmission, a method for indicating transmission, an apparatus for determining transmission, an apparatus for indicating transmission, a communication device, and a computer-readable storage medium to solve technical problems in related arts.

According to a first aspect of the embodiments of the disclosure, the method for determining transmission is provided. The method is performed by a terminal. The method includes: determining, based on first information sent by a network device, a symbol available for sending a physical uplink shared channel (PUSCH) transmitted in multiple slots is determined, in which the symbol includes at least one of: a subband full-duplex (SBFD) symbol or a non-SBFD symbol.

According to a second aspect of the embodiments of the disclosure, a method for indicating transmission is provided. The method is performed by a network device. The method includes: sending first information to a terminal. The first information indicates a symbol available for sending a physical uplink shared channel (PUSCH) transmitted in multiple slots sent by the terminal. The symbol includes at least one of a subband full-duplex (SBFD) symbol or a non-SBFD symbol.

According to a third aspect of the embodiments of the disclosure, an apparatus for determining transmission is provided. The apparatus is configured in a terminal. The apparatus includes: a processing module configured to determine, based on first information sent by a network device, a symbol available for transmitting a physical uplink shared channel (PUSCH) in multiple slots. The symbol includes at least one of: a sub-band full-duplex (SBFD) symbol or a non-SBFD symbol.

According to a fourth aspect of the embodiments of the disclosure, an apparatus for indicating transmission is provided. The method is configured in a network device, and the apparatus includes: a sending module configured to send first information to a terminal, in which the first information indicate a symbol available for transmitting a physical uplink shared channel (PUSCH) in multiple slots, and the symbol includes at least one of: a subband full-duplex (SBFD) symbol or a non-SBFD symbol.

According to a fifth aspect of the embodiments of the disclosure, a communication system is provided. The communication system includes a terminal and a network device. The terminal is configured to implement the above-mentioned method for determining transmission, and the network device is configured to implement the above-mentioned method for indicating transmission.

According to a sixth aspect of the embodiments of the disclosure, a communication device is provided. The communication device includes a processor, and a memory for storing a computer program. When the computer program is executed by the processor, the above-mentioned method for determining transmission is implemented.

According to a seventh aspect of the embodiments of the disclosure, a communication device is provided. The communication device includes a processor, and a memory for storing a computer program. When the computer program is executed by the processor, the above-mentioned method for indicating transmission is implemented.

According to an eighth aspect of the embodiments of the disclosure, a computer-readable storage medium having a computer program stored therein is provided. When the computer program is executed by a processor, the above-mentioned method for determining transmission is implemented.

According to a ninth aspect of the embodiments of the disclosure, a computer-readable storage medium having a computer program stored thereon is provided. When the computer program is executed by a processor, the above-mentioned method for indicating transmission is implemented.

According to the embodiments of the disclosure, the terminal may receive the first information sent by a network device, and determine, based on the first information, the symbol available for transmitting the PUSCH in multiple slots. For example, it may be determined that only the SBFD symbol is available for transmitting the PUSCH in multiple slots, it may be determined that only the on-SBFD symbol is available for transmitting the PUSCH tin multiple slots, or it may be determined that the SBFD symbol and the non-SBFD symbol are available for transmitting the PUSCH in multiple slots Accordingly, it may be ensured that the terminal-determined symbol available for transmitting the PUSCH in the multiple slots is consistent with the understanding of the network device, which is conducive to ensuring the communication quality between the network device and the terminal.

### BRIEF DESCRIPTION OF THE DRAWINGS

In order to more clearly illustrate the technical solutions in the embodiments of the disclosure, the drawings required for use in the description of the embodiments will be briefly introduced below. Obviously, the drawings described below are only some embodiments of the disclosure. For those skilled in the art, other drawings may be obtained based on these drawings without creative work.
FIG. 1 is a schematic diagram illustrating an application scenario according to an embodiment of the disclosure.
FIG. 2 is a schematic diagram illustrating an SBFD slot according to an embodiment of the disclosure.
FIG. 3 is a schematic flowchart illustrating a method for determining transmission according to an embodiment of the disclosure.
FIG. 4A is a schematic diagram illustrating a frequency domain resource according to an embodiment of the disclosure.
FIG. 4B is a schematic diagram illustrating another frequency domain resource according to an embodiment of the disclosure.
FIG. 5 is a schematic flowchart illustrating another method for determining transmission according to an embodiment of the disclosure.
FIG. 6 is a schematic flowchart illustrating still another method for determining transmission according to an embodiment of the disclosure.
FIG. 7 is a schematic flowchart illustrating still another method for determining transmission according to an embodiment of the disclosure.
FIG. 8 is a schematic flowchart illustrating still another method for determining transmission according to an embodiment of the disclosure.
FIG. 9 is a schematic flowchart illustrating still another method for determining transmission according to an embodiment of the disclosure.
FIG. 10 is a schematic flowchart illustrating still another method for determining transmission according to an embodiment of the disclosure.
FIG. 11 is a schematic flowchart illustrating still another method for determining transmission according to an embodiment of the disclosure.
FIG. 12 is a schematic flowchart illustrating still another method for determining transmission according to an embodiment of the disclosure.
FIG. 13 is a schematic flowchart illustrating still another method for determining transmission according to an embodiment of the disclosure.
FIG. 14 is a schematic flowchart illustrating a method for indicating transmission according to an embodiment of the disclosure.
FIG. 15 is a schematic block diagram illustrating an apparatus for determining transmission according to an embodiment of the disclosure.
FIG. 16 is a schematic block diagram illustrating an apparatus for indicating transmission according to an embodiment of the disclosure.
FIG. 17 is a schematic block diagram illustrating a device for determining transmission according to an embodiment of the disclosure.
FIG. 18is a schematic block diagram illustrating a device for indicating transmission according to an embodiment of the disclosure.

### DETAILED DESCRIPTION

The embodiments or examples of the disclosure are not exhaustive, but are only illustrative of some embodiments or examples, and are not intended to be specific limitations on the scope of protection of the disclosure. In the absence of contradiction, each step in a certain embodiment or example may be implemented as an independent example, and the steps may be combined arbitrarily. For example, the solution after removing some steps in a certain embodiment or example may also be implemented as an independent example, and the order of the steps in a certain embodiment or example may be arbitrarily exchanged. In addition, the optional methods or optional examples in a certain embodiment or example may be combined arbitrarily. Furthermore, the various embodiments or examples may be combined arbitrarily. For example, some or all steps of different embodiments or examples may be combined arbitrarily, and a certain embodiment or example may be combined arbitrarily with the optional methods or optional examples of other embodiments or examples.

In some implementation solutions or examples, "in response to ...", "in the case of ...", "at the time of ...", "when ...", "if ...", etc. in the disclosure may be replaced with each other.

In some embodiments or examples, the description methods of the disclosure, such as "A or B", "A and/or B", "at least one of A and B", "in one case, performing A; in another case, performing B", "in response to one case, performing A; in response to another case, performing B", etc., may include at least one of the following technical solutions depending on the situation: performing A independently of B, that is, performing A in some embodiments or examples; performing B independently of A, that is, performing B in some embodiments or examples; selectively performing A or B, that is, selecting to perform A or B in some embodiments or examples; performing both A and B, that is, performing A and B in some embodiments or examples.

In some embodiments or examples, "including A", "comprising A", "used to indicate A" and "carrying A" in the disclosure may be interpreted as directly carrying A or indirectly indicating A.

In addition, each element, each row, or each column in the table involved in the disclosure may be implemented as an independent embodiment, and the combination of any elements, any rows, and any columns may also be implemented as an independent embodiment.

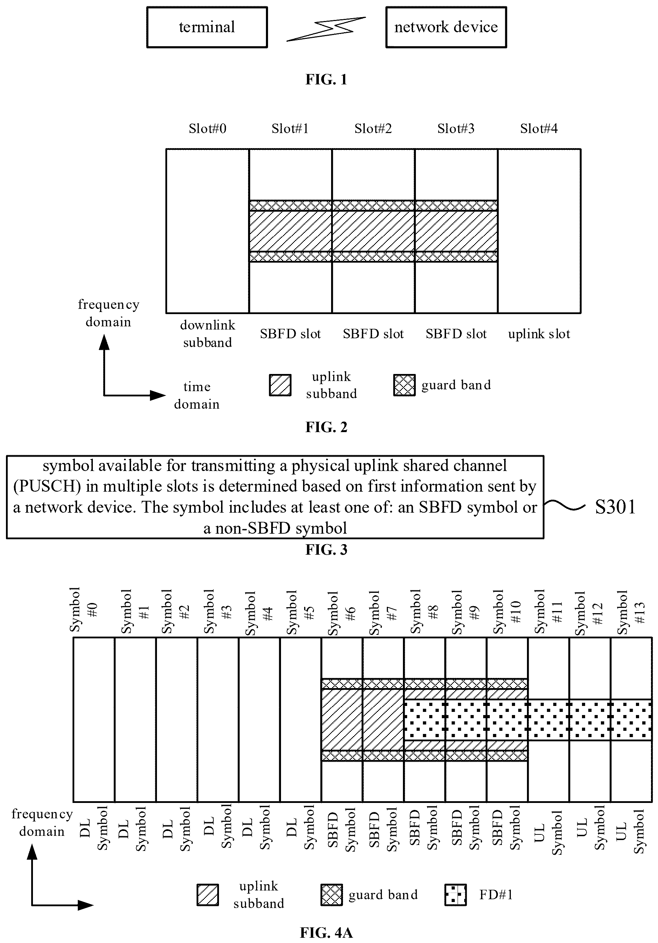

FIG. 1 is a schematic diagram illustrating an application scenario according to an embodiment of the disclosure.

As illustrated in FIG. 1, the embodiments of the disclosure may be applied to, but is not limited to, a scenario where a terminal communicates with a network device. The subjects illustrated in FIG. 1 are all examples. The implementation methods or embodiments of the disclosure may include all or part of the subjects in FIG. 1, and may also include other subjects that are not illustrated in FIG. 1. The number of subjects is arbitrary and is not limited to FIG. 1. The connection relationships illustrated in FIG. 1 are examples. Any subjects may be connected or disconnected, and the connection may be in any manner, which may be a direct connection or an indirect connection, or may be a wired connection or a wireless connection.

The "terminal" in the embodiments of the disclosure include but are not limited to a mobile phone, a tablet computer, a wearable device, a sensor, an Internet of Thins (IoT) device, or other communication devices. The terminal may communicate with a network device, including but not limited to a network device in fourth generation (4G), fifth generation (5G), sixth generation (6G) or other communication systems, such as a base station, a core network, or others.

In an embodiment, the network device may configure a subband for the terminal. For example, an uplink subband may be configured for the terminal in a slot, or a downlink subband may be configured for the terminal in a slot.

It should be noted that the "uplink" involved in the embodiments of the disclosure may be referred to as UpLink (UL), and the "downlink" involved may be referred to as DownLink (DL).

A slot configured with an uplink subband includes at least one of: a downlink slot, a flexible slot or an uplink slot. A slot configured with a downlink subband includes at least one of: an uplink slot, a flexible slot or a downlink slot.

The network device may perform full-duplex communication in a slot configured with the uplink subband and in a slot configured with the downlink subband. Therefore, the slot configured with the uplink subband and the slot configured with the downlink subband may also be called "subband full-duplex (SBFD) slots". Correspondingly, a slot that is not configured with any subband may be called "non-SBFD slot". However, the terminal may be a terminal capable of performing half-duplex communication in the SBFD slot. For example, in the SBFD slot, the terminal may perform uplink transmission but cannot receive downlink transmission, or the terminal may receive downlink transmission but cannot perform uplink transmission. In a case where a symbol includes both the uplink subband and the downlink subband in the frequency domain, the symbol may be called an "SBFD symbol". For example, in a case where some symbols in a slot are configured as SBFD symbols, the slot may be called "SBFD slot". For example, in a case where all symbols in a slot are configured as SBFD symbols, the slot may be called "SBFD slot".

FIG. 2 is a schematic diagram illustrating an SBFD slot according to an embodiment of the disclosure.

Taking an example that an SBFD slot includes a slot configured with an uplink subband as an example, as illustrated in FIG. 2, in the five slots, namely slot#0 to slot#4, the network device configures uplink subbands for the terminal in slot#1 to slot#3. Thus, slot#1 to slot#3 may be called SBFD slots. Slot#0 is a downlink slot, and slot#4 is an uplink slot, then slot#0 and slot#4 may be called non-SBFD slots.

In the frequency domain resource corresponding to the slot configured with the uplink subband, a downlink resource other than the uplink subband may be called "downlink subband". A guard band (GB) may be set between the uplink subband and the downlink subband to isolate the uplink subband and the downlink subband in the frequency domain.

In a case where the terminal transmits a PUSCH in multiple slots to the network device, some of the PUSCH is transmitted in the non-SBFD slots and some of the PUSCH is transmitted in the SBFD slots. Then, there may be a conflict between a first frequency domain resource configured for the PUSCH and the downlink subband in the SBFD slots.

Among symbols included in an SBFD slot, the uplink subband may be configured in all or some of the symbols, where a symbol configured with a subband (such as the uplink subband) may be called "SBFD symbol", and a symbol not configured with any subband (such as the uplink subband) may be called "non-SBFD symbol". The first frequency domain resource configured for the PUSCH conflicts with the downlink subband in the SBFD slots, which means that the first frequency domain resource configured for the PUSCH in the SBFD slots conflicts with the downlink subband in the SBFD symbols.

For the case where the first frequency domain resource configured for the PUSCH conflicts with the downlink subband in the SBFD symbols, in some cases, the terminal determines that the terminal is capable of sending the PUSCH in the SBFD symbols, while the network device determines that the terminal cannot send the PUSCH in the SBFD symbols; or the terminal determines that the terminal cannot send the PUSCH in the SBFD symbols, while the network device determines that the terminal is able to send the PUSCH in the SBFD symbols. It may be seen that the understanding of the terminal and the network device may be inconsistent as to whether the terminal is able to send, in the SBFD symbols, the PUSCH transmitted in multiple slots, which will affect the communication quality between the terminal and the network device, so it is necessary to clarify on which type of symbols the terminal is able to send the PUSCH.

The symbol in the embodiments of the disclosure may include an Orthogonal Frequency Division Multiplexing (OFDM) symbol.

FIG. 3 is a schematic flowchart illustrating a method for determining transmission according to an embodiment of the disclosure. The method for determining transmission illustrated in this embodiment may be performed by a terminal.

As illustrated in FIG. 3, the method for determining transmission include the following.

In step S301, symbol(s) available for transmitting a physical uplink shared channel (PUSCH) in multiple slots is/are determined based on first information sent by a network device. The symbol(s) includes at least one of: SBFD symbol(s) or non-SBFD symbol(s).

It should be noted that the embodiments illustrated in FIG. 3 may be implemented separately or in combination with at least one other embodiments in the disclosure. Whether being implemented separately or being implemented in combination with at least one other embodiment may be selected as needed, which is not limited in the disclosure.

In an embodiment, the terminal may receive the first information sent by the network device, and determine the symbol(s) available for transmitting the PUSCH in multiple slots, based on the first information. For example, the terminal may determine that only the SBFD symbol(s) is/are available for transmitting the PUSCH in multiple slots, that only the non-SBFD symbol(s) is/are available for transmitting the PUSCH in multiple slots, or that the SBFD symbol(s) and the non-SBFD symbol(s) are available for transmitting the PUSCH in multiple slots . Accordingly, it may be ensured that the symbol(s) available for transmitting the PUSCH in multiple slots determined by the terminalis/are consistent with the understanding of the network device, which is conducive to ensuring the communication quality between the network device and the terminal.

It should be noted that the embodiments of the disclosure mainly illustrate the technical solution of the case where the SBFD symbol is a symbol configured with an uplink subband, but the technical solution of the disclosure may also be applied to the case where the SBFD symbol is a symbol configured with a downlink subband.

In an embodiment, the PUSCH transmitted in multiple slots include at least one of the following:
PUSCH repetition, such as PUSCH repetition type A, in which the PUSCH repetition type A may further include PUSCH repetition type A with available slot counting and PUSCH repetition type A without available slot counting;
Configured Grant (CG) enabled PUSCH (CG PUSCH), in which the CG PUSCH may further include Type 1 CG PUSCH and Type 2 CG PUSCH;
Dynamic Grant (DG) PUSCH with repetition;
PUSCH of transport block (TB) over multi-slots (TBoMS), where TB stands for Transport Block, in which the PUSCH of TBoMS may include PUSCH of TBoMS with repetition and PUSCH of TBoMS without repetition; or
Multiple PUSCH scheduled by single downlink control information (DCI).

Each type of CG PUSCH may further include CG PUSCH with repetition and CG PUSCH without repetition. In detail, CG PUSCH with repetition may include Type 1 or Type 2 CG PUSCH with repetition type A.

For the CG PUSCH with repetition, the terminal may send multiple PUSCHs in the CG resources, and each PUSCH may be repeatedly transmitted. The repeated transmission of a PUSCH may be called a group. Then, the "PUSCH transmitted in multiple slots" in this embodiment may include PUSCH(s) in one group in the CG PUSCH with repetition, or include PUSCH(s) in all groups in the CG PUSCH with repetition.

In an embodiment, the first information includes at least one of: frequency domain resource information; or an indication field.

The network device indicates, through the first information, symbol(s) available for transmitting the PDSCH in multiple slots. The indication manner includes, but is not limited to, explicit indication or implicit indication.

For example, in the case where an explicit indication manner is adopted, the first information sent by the network device may include an indication field which may be a newly added field in the signaling or be an existing field in the reused signaling (e.g., a field composed of reserved bits). The signaling includes at least one of: Radio Resource Control (RRC) signaling, DCI, or Media-Access-Control Control Element (MAC CE). The terminal receives the indication field in the signaling based on an indication, and may determine the symbol(s), indicated by the network device, available for transmitting the PUSCH in multiple slots.

For example, in the case where an implicit indication manner is adopted, the first information sent by the network device may include frequency domain resource information. The terminal may determine a frequency domain resource configured for the PUSCH transmitted in multiple slots based on the frequency domain resource information, and determine the symbol(s), indicated by the network device, available for transmitting the PUSCH in multiple slots, based on a relationship between the frequency domain resource configured for the PUSCH transmitted in multiple slots and an uplink resource corresponding to the SBFD symbol.

It should be noted that the uplink resource corresponding to the SBFD symbol in the embodiments of the disclosure may include an uplink subband, or include an uplink subband and a guard band.

In an embodiment, determining, based on the first information sent by the network device, symbol(s) available for transmitting the PUSCH in multiple slots includes at least one of the following:
in the case where the frequency domain resource configured for the PUSCH by the frequency domain resource information sent by the network device is within the uplink resource corresponding to the SBFD symbol, determining that the SBFD symbol(s) and the non-SBFD symbol(s) are available for transmitting the PUSCH in multiple slots; or
in the case where the frequency domain resource configured for the PUSCH by the frequency domain resource information sent by the network device includes a frequency domain resource other than the uplink resource corresponding to the SBFD symbol, determining that only the SBFD symbol(s) or only the non-SBFD symbol(s) is/are available for transmitting the PUSCH transmitted in multiple slots.

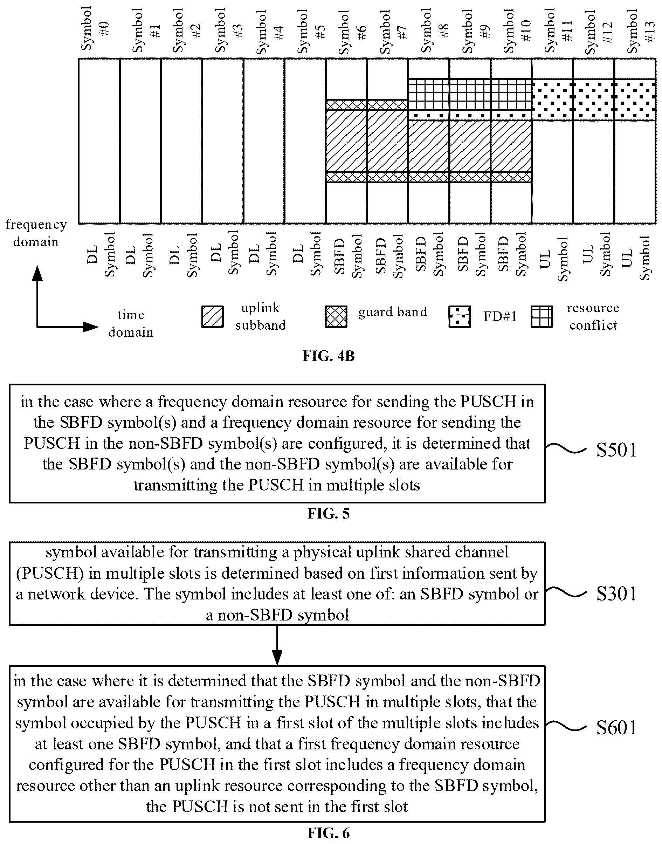

FIG. 4A is a schematic diagram illustrating a frequency domain resource according to an embodiment of the disclosure. FIG. 4B is a schematic diagram illustrating another frequency domain resource according to an embodiment of the disclosure.

Taking a slot including 14 symbols as an example, the uplink subband is configured in symbols #6 to symbol #10, and the symbols that the PUSCH needs to occupy in the SBFD slot include symbols #8 to symbol #13, among which symbols #11 to symbol #13 are not configured with the uplink subband and thus are non-SBFD symbols, while symbols #8 to symbol #10 are SBFD symbols.

As illustrated in FIG. 4A, the frequency domain resource configured for the PUSCH transmitted in multiple slots by the network device is FD#1, and FD#1 is within the uplink resource (e.g., uplink subband or uplink subband and guard band) corresponding to the SBFD symbols. The terminal may determine that the frequency domain resource configured for the PUSCH transmitted in multiple slots is FD#1 based on the frequency domain resource information. In the case where the terminal determines that FD#1 is within the uplink resource corresponding to the SBFD symbols, it may be determined that the network device indicates that the SBFD symbol(s) and the non-SBFD symbol(s) are available for transmitting the PUSCH by the terminal in multiple slots. For example, it is determined that the network device indicates that symbol #8 to symbol #13 are available for transmitting the PUSCH in multiple slots.

As illustrated in FIG. 4B, the frequency domain resource configured for the PUSCH transmitted in multiple slots by the network device is FD#1, and FD#1 includes a frequency domain resource other than the uplink resource corresponding to the SBFD symbols. The terminal may determine that the frequency domain resource configured for the PUSCH transmitted in multiple slots is FD#1 based on the frequency domain resource information. In the case where the terminal determines that FD#1 includes a frequency domain resource other than the uplink resource corresponding to the SBFD symbols (for example, there is a resource conflict between FD#1 and the frequency domain resource other than the uplink resource in FIG. 4B), it may be determined that the network device instructs the terminal to send the PUSCH transmitted in multiple slots only in non-SBFD symbol(s). For example, it is determined that only the non-SBFD symbols (symbols #11 to #13) are available for transmitting the PUSCH in multiple slots.

It should be noted that in the case where the FD#1 contains a frequency domain resource other than the uplink resource corresponding to the SBFD symbols, the terminal may also determine that the network device instructs the terminal to send the PUSCH transmitted in multiple slots only in the SBFD symbols. For example, in the case where the symbol(s) where a first PUSCH of the PUSCH transmitted in multiple slots is located includes SBFD symbol(s), the terminal may determine that only the SBFD symbol(s) is/are available for transmitting the PUSCH in multiple slots, or in the case where the symbol(s) where the first PUSCH of the PUSCH transmitted in multiple slots is located is/are all SBFD symbol(s), the terminal determines that only the SBFD symbol(s) is/are available for transmitting the PUSCH in multiple slots. The first PUSCH refers to the PUSCH transmitted in a first slot among the multiple slots.

In an embodiment, determining that only the SBFD symbol(s) or only the non-SBFD symbol(s) is/are available for transmitting the PUSCH in multiple slots includes at least one of the following:
symbol(s) where the first PUSCH of the PUSCH transmitted in multiple slots is located including SBFD symbol(s), determining that only the SBFD symbol(s) is/are available for transmitting the PUSCH in multiple slots; or
symbol(s) where the first PUSCH of the PUSCH transmitted in multiple slots is located being all non-SBFD symbol(s), determining that only the non-SBFD symbol(s) is/are available for transmitting the PUSCH in multiple slots.

For example, the terminal may determine a slot where the first PUSCH of the PUSCH transmitted in multi-lots is located and determine the symbol(s) where the first PUSCH is located in the slot. In the case where the symbol(s) where the first PUSCH is located in the slot includes SBFD symbol(s), the terminal may determine that only the SBFD symbol(s) is/are available for transmitting the PUSCH in multiple slots. In the case where the symbol(s) where the first PUSCH is located in the slot is/are all non-SBFD symbol(s), the terminal may determine that only the non-SBFD symbol(s) is/are available for transmitting the PUSCH in multiple slots.

In an embodiment, determining that only the SBFD symbol(s) or only the non-SBFD symbol(s) is/are available for transmitting the PUSCH in multiple slots includes at least one of the following:
symbol(s) where the first PUSCH of the PUSCH transmitted in multiple slots is located being all SBFD symbol(s), determining that only the SBFD symbol(s) is/are available for transmitting the PUSCH in multiple slots; or
symbol(s) where the first PUSCH of the PUSCH transmitted in multiple slots is located including non-SBFD symbol(s), determining that only the non-SBFD symbol(s) is/are available for transmitting the PUSCH in multiple slots.

For example, the terminal may determine a slot where the first PUSCH of the PUSCH transmitted in multiple slots is located, and determine the symbol(s) where the first PUSCH is located in the slot. In the case where all of the symbol(s) where the first PUSCH is located in the slot are SBFD symbol(s), the terminal may determine that only the SBFD symbol(s) is/are available for transmitting the PUSCH in multiple slots. In the case where the symbol(s) where the first PUSCH is located in the slot includes non-SBFD symbol(s), the terminal may determine that only the non-SBFD symbol(s) is/are available for transmitting the PUSCH in multiple slots.

It should be noted that the number of slots where the PUSCH is located illustrated in the figure is only a local example, and the PUSCH may also be transmitted over slots other than those in the figure.

FIG. 5 is a schematic flowchart illustrating another method for determining transmission according to an embodiment of the disclosure. The method for determining transmission illustrated in this embodiment may be performed by a terminal. As illustrated in FIG. 5, determining the symbol(s) available for transmitting the PUSCH in multiple slots based on the first information sent by a network device includes the following.

In step S501, in the case where a frequency domain resource for sending the PUSCH in the SBFD symbol(s) and a frequency domain resource for sending the PUSCH in the non-SBFD symbol(s) are configured, it is determined that the SBFD symbol(s) and the non-SBFD symbol(s) are available for transmitting the PUSCH in multiple slots.

It should be noted that the embodiments illustrated in FIG. 5 may be implemented separately or in combination with at least one other embodiment in the disclosure. Whether being implemented separately or being implemented in combination with at least one other embodiment may be selected as needed, which is not limited in the disclosure.

In an embodiment, the first information sent by the network device may include frequency domain resource information, and the frequency domain resource information may be used for configuring a frequency domain resource for sending the PUSCH in the SBFD symbol(s) and a frequency domain resource for sending the PUSCH in the non-SBFD symbol(s). The frequency domain resource for sending the PUSCH in the SBFD symbol(s) does not include any frequency domain resource other than the uplink resource corresponding to the SBFD symbol(s).

In this case, the terminal may determine the frequency domain resource configured for sending the PUSCH in the SBFD symbol(s) and the frequency domain resource configured for sending the PUSCH in the non-SBFD symbol(s) based on the frequency domain resource information, and further determine that the SBFD symbol(s) and the non-SBFD symbol(s) are available for transmitting the PUSCH in multiple slots.

For example, in the non-SBFD symbol(s), the PUSCH may be sent with the frequency domain resource used for sending the PUSCH in the non-SBFD symbol(s), and in the SBFD symbol(s), the PUSCH may be sent with the frequency domain resource used for sending the PUSCH in the SBFD symbol(s).

In an embodiment, the indication field occupies 1 bit or 2 bits. It should be noted that the number of bits occupied by the indication field is not limited to 1 or 2, and may also be other numbers. The following embodiments mainly illustrate the technical solution of the disclosure for the cases where the indication field occupies 1 bit and the indication field occupies 2 bits.

In an embodiment, determining, based on the first information sent by the network device, symbol(s) available for transmitting the PUSCH in multiple slots includes at least one of the following:
in the case where the indication field indicates that the SBFD symbol(s) and the non-SBFD symbol(s) are available for transmitting the PUSCH in multiple slots, determining that the SBFD symbol(s) and the non-SBFD symbol(s) are available for transmitting the PUSCH in multiple slots; or
in the case where the indication field indicates that only the SBFD symbol(s) or only the non-SBFD symbol(s) is/are available for transmitting the PUSCH in multiple slots, it is determined that only the SBFD symbol(s) or only the non-SBFD symbol(s) is/are available for transmitting the PUSCH in multiple slots.

In an embodiment, in the case where the indication field occupies 1 bit, the indication field may indicate that the SBFD symbol(s) and the non-SBFD symbol(s) are available for transmitting the PUSCH in multiple slots, or indicate that only the SBFD symbol(s) or only the non-SBFD symbol(s) is/are available for transmitting the PUSCH in multiple slots.

For example, in the case where the value of the 1-bit indication field is 1, it indicates that the SBFD symbol(s) and the non-SBFD symbol(s) are available for transmitting the PUSCH in multiple slots. In the case where the terminal determines that the value of the 1-bit indication field is 1, the terminal may determine that the SBFD symbol(s) and the non-SBFD symbol(s) are available for transmitting the PUSCH in multiple slots.

For example, in the case where the value of the 1-bit indication field is 0, only the SBFD symbol(s) or the non-SBFD symbol(s) is/are available for transmitting the PUSCH in multiple slots. In the case where the terminal determines that the value of the 1-bit indication field is 0, the terminal may determine that only the SBFD symbol(s) or the non-SBFD symbol(s) is/are available for transmitting the PUSCH in multiple slots.

In an embodiment, determining that only the SBFD symbol(s) or the non-SBFD symbol(s) is/are available for transmitting the PUSCH in multiple slots includes at least one of the following:
symbol(s) where a first PUSCH of the PUSCH transmitted in multiple slots is located including SBFD symbol(s), determining that the only the SBFD symbol(s) is/are available for transmitting the PUSCH in multiple slots; or
symbol(s) where the first PUSCH of the PUSCH transmitted in multiple slots is located being all non-SBFD symbol(s), determining that only the non-SBFD symbol(s) is/are available for transmitting the PUSCH in multiple slots.

For example, the terminal may determine a slot where the first PUSCH of the PUSCH transmitted in multiple slots is located, and determine the symbol(s) where the first PUSCH is located in the slot. In the case where the symbol(s) in which the first PUSCH is located in the slot includes the SBFD symbol(s), the terminal may determine that only the SBFD symbol(s) is/are available for transmitting the PUSCH in multiple slots. In the case where the symbol(s) in which the first PUSCH is located in the slot is/are all non-SBFD symbol(s), the terminal may determine that only the non-SBFD symbol(s) is/are available for transmitting the PUSCH in multiple slots.

In an embodiment, determining that only the SBFD symbol(s) or the non-SBFD symbol(s) is/are available for transmitting the PUSCH in multiple slots includes at least one of the following:
symbol(s) in which the first PUSCH of the PUSCH transmitted in multiple slots is located being all SBFD symbol(s), determining that only the SBFD symbol(s) is/are available for transmitting the PUSCH in multiple slots; or
symbol(s) in which the first PUSCH of the PUSCH transmitted in multiple slots is located including non-SBFD symbol(s), determining that only non-SBFD symbol(s) is/are available for transmitting the PUSCH in multiple slots.

For example, the terminal may determine the slot where the first PUSCH of the PUSCH transmitted in multiple slots is located, and determine the symbol(s) in which the first PUSCH is located in the slot. In the case where all of the symbol(s) in which the first PUSCH is located in the slot is the SBFD symbol(s), the terminal may determine that only the SBFD symbol(s) is/are available for transmitting the PUSCH in multiple slots. In the case where the symbol(s) in which the first PUSCH is located in the slot includes the non-SBFD symbol(s), the terminal may determine that only non-SBFD symbol(s) is/are available for transmitting the PUSCH in multiple slots.

In an embodiment, determining that only the SBFD symbol(s) or the non-SBFD symbol(s) is/are available for transmitting the PUSCH in multiple slots includes at least one of the following:
all of symbol(s) in which the first PUSCH of the PUSCH transmitted in multiple slots is located being SBFD symbol(s), determining that only the SBFD symbol(s) is/are available for transmitting the PUSCH in multiple slots; or
all of symbol(s) in which the first PUSCH of the PUSCH transmitted in multiple slots is located being non-SBFD symbol(s), determining that only the non-SBFD symbol(s) is/are available for transmitting the PUSCH in multiple slots.

For example, the terminal may determine the slot where the first PUSCH of the PUSCH transmitted in multiple slots is located, and determine the symbol(s) where the first PUSCH is located in the slot. In the case where all of the symbol(s) where the first PUSCH is located in the slot is the SBFD symbol(s), the terminal may determine that only the SBFD symbol(s) is/are available for transmitting the PUSCH in multiple slots. In the case where all of the symbol(s) where the first PUSCH is located in the slot is the non-SBFD symbol(s), the terminal may determine that only the non-SBFD symbol(s) is/are available for transmitting the PUSCH in multiple slots.

In an embodiment, determining, based on the first information sent by the network device, symbol(s) available for transmitting the PUSCH in multiple slots includes at least one of the following:
in the case where the indication field takes a first value or a second value, or where the indication field is empty, indicating that only the SBFD symbol(s) is/are available for transmitting the PUSCH in multiple slots, then determining that only the SBFD symbol(s) is/are available for transmitting the PUSCH in multiple slots;
in the case where the indication field takes a first value or a second value, or where the indication field is empty, indicating that only the non-SBFD symbol(s) is/are available for transmitting the PUSCH in multiple slots, then determining that only the non-SBFD symbol(s) is/are available for transmitting the PUSCH in multiple slots; or
in the case where the indication field takes a first value or a second value, or where the indication field is empty, indicating that the SBFD symbol(s) and the non-SBFD symbol(s) are available for transmitting the PUSCH in multiple slots, then determining that the SBFD symbol(s) and the non-SBFD symbol(s) are available for transmitting the PUSCH in multiple slots.

It is understandable that for cases where the indication field takes the first value, where the indication field takes the second value or where the indication field is empty, the content indicated by the first information is different. The following describes the content indicated by the first information when the indication field takes the first value or the second value, or the indication field is empty through several embodiments, but the correspondence between the content indicated by the first information and cases where the indication field takes the first value or the second value or the indication field is empty is not limited to the following embodiments.

In an embodiment, in the case where the indication field occupies 1 bit, the indication field may indicate that only the SBFD symbol(s) is/are available for transmitting the PUSCH in multiple slots or indicate that only the non-SBFD symbol(s) is/are available for transmitting the PUSCH in multiple slots. In the case where the indication field is empty, the indication field may indicate that the SBFD symbol(s) and the non-SBFD symbol(s) are available for transmitting the PUSCH in multiple slots.

For example, in the case where the value of the 1-bit indication field is 1, it indicates that only the SBFD symbol(s) is/are available for transmitting the PUSCH in multiple slots. In the case where the terminal determines that the value of the 1-bit indication field is 1, the terminal may determine that only the SBFD symbol(s) is/are available for transmitting the PUSCH in multiple slots.

For example, in the case where the value of the 1-bit indication field is 0, it indicates that only non-SBFD symbol(s) is/are available for transmitting the PUSCH in multiple slots. In the case where the terminal determines that the value of the 1-bit indication field is 0, the terminal may determine that only the non-SBFD symbol(s) is/are available for transmitting the PUSCH in multiple slots).

For example, in the case where the terminal determines that the indication field is empty, the terminal may determine that the SBFD symbol(s) and the non-SBFD symbol(s) are available for transmitting the PUSCH in multiple slots.

In an embodiment, in the case where the indication field occupies 1 bit, the indication field may indicate that only the SBFD symbol(s) is/are available for transmitting the PUSCH in multiple slots or indicate that the SBFD symbol(s) and the non-SBFD symbol(s) are available for transmitting the PUSCH in multiple slots. In the case where the indication field is empty, the indication field may indicate that only the non-SBFD symbol(s) is/are available for transmitting the PUSCH in multiple slots).

For example, in the case where the value of the 1-bit indication field is 1, it indicates that the only the SBFD symbol(s) is/are available for transmitting the PUSCH in multiple slots. In the case where the terminal determines that the value of the 1-bit indication field is 1, the terminal may determine only the SBFD symbol(s) is/are available for transmitting the PUSCH in multiple slots.

For example, in the case where the value of the 1-bit indication field is 0, it indicates that the SBFD symbol(s) and the non-SBFD symbol(s) are available for transmitting the PUSCH in multiple slots. In the case where the terminal determines that the value of the 1-bit indication field is 0, the terminal may determine that the SBFD symbol(s) and the non-SBFD symbol(s) are available for transmitting the PUSCH in multiple slots.

For example, in the case where the terminal determines that the indication field is empty, the terminal may determine that only non-SBFD symbol(s) is/are available for transmitting the PUSCH in multiple slots.

In an embodiment, in the case where the indication field occupies 1 bit, the indication field may indicate the SBFD symbol(s) and the non-SBFD symbol(s) are available for transmitting the PUSCH in multiple slots or indicate that only the non-SBFD symbol(s) is/are available for transmitting the PUSCH in multiple slots. In the case where the indication field is empty, the indication field may indicate that only the SBFD symbol(s) is/are available for transmitting the PUSCH in multiple slots.

For example, in the case where the value of the 1-bit indication field is 1, it indicates that the SBFD symbol(s) and the non-SBFD symbol(s) are available for transmitting the PUSCH in multiple slots. In the case where the terminal determines that the value of the 1-bit indication field is 1, the terminal may determine that the SBFD symbol(s) and the non-SBFD symbol(s) are available for transmitting the PUSCH in multiple slots.

For example, in the case where the value of the 1-bit indication field is 0, it indicates that only the non-SBFD symbol(s) is/are available for transmitting the PUSCH in multiple slots. In the case where the terminal determines that the value of the 1-bit indication field is 0, the terminal may determine that only the non-SBFD symbol(s) is/are available for transmitting the PUSCH in multiple slots.

For example, in the case where the terminal determines that the indication field is empty, the terminal may determine that only the SBFD symbol(s) is/are available for transmitting the PUSCH in multiple slots.

In an embodiment, determining, based on the first information sent by the network device, symbol(s) available for transmitting the PUSCH in multiple slots includes at least one of the following:
in the case where the indication field indicates that the SBFD symbol(s) and the non-SBFD symbol(s) are available for transmitting the PUSCH in multiple slots, determining that the SBFD symbol(s) and the non-SBFD symbol(s) are available for transmitting the PUSCH in multiple slots;
in the case where the indication field indicates that only the SBFD symbol(s) is/are available for transmitting the PUSCH in multiple slots, determining that only the SBFD symbol(s) is/are available for transmitting the PUSCH in multiple slots; or
in the case where the indication field indicates that only the non-SBFD symbol(s) is/are available for transmitting the PUSCH in multiple slots, determining that only the non-SBFD symbol(s) is/are available for transmitting the PUSCH in multiple slots.

In an embodiment, in the case where the indication field occupies 2 bits, the indication field may indicate that the SBFD symbol(s) and the non-SBFD symbol(s) are available for transmitting the PUSCH in multiple slots, indicate that only the non-SBFD symbol(s) is/are available for transmitting the PUSCH in multiple slots), or indicate that only the SBFD symbol(s) is/are available for transmitting the PUSCH in multiple slots.

For example, in the case where the value of the 2 bits occupied by the indication field is 00, it indicates that the SBFD symbol(s) and the non-SBFD symbol(s) are available for transmitting the PUSCH in multiple slots. In the case where the terminal determines that the value of the 2 bits occupied by the indication field is 00, the terminal may determine that the SBFD symbol(s) and the non-SBFD symbol(s) are available for transmitting the PUSCH in multiple slots.

For example, in the case where the value of the 2 bits occupied by the indication field is 01, it indicates that only the SBFD symbol(s) is/are available for transmitting the PUSCH in multiple slots. In the case where the terminal determines that the value of the 2 bits occupied by the indication field is 01, the terminal may determine that only the SBFD symbol(s) is/are available for transmitting the PUSCH in multiple slots.

For example, in the case where the value of the 2 bits occupied by the indication field is 10, it indicates that only non-SBFD symbol(s) is/are available for transmitting the PUSCH in multiple slots. In the case where the terminal determines that the value of the 2 bits occupied by the indication field is 10, the terminal may determine that only the non-SBFD symbol(s) is/are available for transmitting the PUSCH in multiple slots.

It should be noted that the availability of a certain type of symbols for sending the PUSCH in multiple slots in the embodiments of the disclosure does not mean that the terminal must send the PUSCH transmitted in multiple slots in this type of symbols, but means that the terminal is able to/can send the PUSCH transmitted in multiple slots in this type of symbols, but is unable to or cannot send the PUSCH transmitted in multiple slots in symbols other than this type of symbols.

For example, the terminal determines that the SBFD symbol(s) and the non-SBFD symbol(s) are available for transmitting the PUSCH in multiple slots, which means that the terminal is able to send the PUSCH transmitted in multiple slots in the SBFD symbol(s) and in the non-SBFD symbol(s) in each slot where the PUSCH is located, and which does not mean that the terminal needs to send the PUSCH transmitted in multiple slots in the SBFD symbol(s) and in the non-SBFD symbol(s) in each slot where the PUSCH is located.

For example, the terminal determines that only the SBFD symbol(s) is/are available for transmitting the PUSCH in multiple slots, which means that the terminal is able to send the PUSCH transmitted in multiple slots in the SBFD symbol(s) in each slot where PUSCH is located, but is unable to send the PUSCH transmitted in multiple slots in the non-SBFD symbol(s), and which does not mean that the terminal needs to send the PUSCH transmitted in multiple slots in the SBFD symbol(s) in each slot where the PUSCH is located.

For example, the terminal determines that only non-SBFD symbol(s) is/are available for transmitting the PUSCH in multiple slots, which means that the terminal is able to send the PUSCH transmitted in multiple slots in the non-SBFD symbol(s) in each slot where the PUSCH is located, but is unable to send the PUSCH transmitted in multiple slots in the SBFD symbol(s), and which does not mean that the terminal needs to send the PUSCH transmitted in multiple slots in the non-SBFD symbol(s) in each slot where the PUSCH is located.

It also needs to further determine which symbols in each slot where the PUSCH is located are available to send the PUSCH by the terminal in multiple slots. The specific determination method will be described in the subsequent embodiments.

In an embodiment, the method for determining transmission also includes: in the case where it is determined that the SBFD symbol(s) and the non-SBFD symbol(s) are available for transmitting the PUSCH in multiple slots, and that the symbols occupied by the PUSCH in multiple slots do not include any SBFD symbol, sending the PUSCH with a first frequency domain resource configured for the PUSCH in multiple slots.

In the case where it is determined that the SBFD symbol(s) and the non-SBFD symbol(s) are available for transmitting the PUSCH in multiple slots, the terminal may further determine whether the symbols occupied by the PUSCH in multiple slots include an SBFD symbol.

In the case where the symbols occupied by the PUSCH in multiple slots do not include any SBFD symbol, when the terminal sends the PUSCH transmitted in multiple slots in multiple slots, the situation of sending the PUSCH in the SBFD symbol(s) does not occur, and thus the first resource FD#1 configured for the PUSCH in multiple slots will not conflict with the frequency domain resource other than the uplink resource. Therefore, the PUSCH is capable of being sent with FD#1 in multiple slots. Correspondingly, the network device may receive the PUSCH transmitted in multiple slots sent by the terminal with FD#1 in multiple slots.

FIG. 6 is a schematic flowchart illustrating another method for determining transmission according to an embodiment of the disclosure. The method for determining transmission illustrated in this embodiment may be performed by a terminal. As illustrated in FIG. 6, the method for determining transmission further includes the following.

In step S601, in the case where it is determined that the SBFD symbol(s) and the non-SBFD symbol(s) are available for transmitting the PUSCH in multiple slots, that the symbol(s) occupied by the PUSCH in a first slot of the multiple slots include at least one SBFD symbol, and that a first frequency domain resource configured for the PUSCH in the first slot includes a frequency domain resource other than an uplink resource corresponding to the SBFD symbol, the PUSCH is not sent in the first slot.

It should be noted that the embodiment illustrated in FIG. 6 may be implemented separately or in combination with at least one other embodiment in the disclosure. Whether being implemented separately or being implemented in combination with at least one other embodiment may be selected as needed, which is not limited in the disclosure. In addition, the first frequency domain resource configured in each slot for the PUSCH transmitted in multiple slots may be the same. The first slot may refer to any slot in the multiple slots.

In an embodiment, the method for determining transmission also includes: in the case where it is determined that the SBFD symbol(s) and the non-SBFD symbol(s) are available for transmitting the PUSCH in multiple slots, and that the first frequency domain resource configured for the PUSCH in the first slot of the multiple slots is within the uplink resource corresponding to the SBFD symbol(s), the PUSCH is sent in the first slot.

In an embodiment, in the case that the terminal determines that the SBFD symbol(s) and the non-SBFD symbol(s) are available for transmitting the PUSCH in multiple slots, the terminal may further determine whether the first frequency domain resource FD#1 configured for the PUSCH in the first slot of the multiple slots includes a frequency domain resource other than the uplink resource corresponding to the SBFD symbol(s).

In the case where FD#1 includes the frequency domain resource other than the uplink resource corresponding to the SBFD symbol(s), that is, FD#1 is not within the uplink resource corresponding to the SBFD symbol(s), when the terminal sends the PUSCH transmitted in multiple slots in the SBFD symbol(s) in the first slot, FD#1 will conflict with the frequency domain resource other than the uplink resource. Therefore, the PUSCH transmitted in multiple slots may not be sent in the first slot. Correspondingly, the network device may not receive the PUSCH transmitted in multiple slots sent by the terminal in the first slot.

In the case where FD#1 does not include any frequency domain resource other than the uplink resource corresponding to the SBFD symbol(s), that is, FD#1 is within the uplink resource corresponding to the SBFD symbol(s), when the terminal sends the PUSCH transmitted in multiple slots in the SBFD symbol(s) in the first slot, FD#1 will not conflict with the frequency domain resource other than the uplink resource. Therefore, the PUSCH is capable of being sent in the first slot. Correspondingly, the network device is able to receive the PUSCH transmitted in multiple slots sent by the terminal in the first slot.

In an embodiment, the method for determining transmission further includes: symbol(s) occupied by the PUSCH in a first slot of the multiple slots includes downlink symbol(s), then not transmitting the PUSCH in the first slot. This embodiment may be combined with any other embodiment in the disclosure.

For the case where the terminal determines that the SBFD symbol(s) and the non-SBFD symbol(s) are available for transmitting the PUSCH in multiple slots, the case where the terminal determines that only the SBFD symbol(s) is/are available for transmitting the PUSCH in multiple slots, or the case where the terminal determines that only the non-SBFD symbol(s) is/are available for transmitting the PUSCH in multiple slots, the terminal may always determine whether the symbol(s) occupied by the PUSCH in the first slot of multiple slots used for sending the PUSCH includes a downlink symbol. In the case where it is determined that the symbol(s) occupied by the PUSCH in the first slot include a downlink symbol, FD#1 will conflict with the frequency domain resource other than the uplink resource. Therefore, the PUSCH may not be sent in the first slot. Correspondingly, the network device may not receive the PUSCH transmitted in multiple slots sent by the terminal in the first slot.

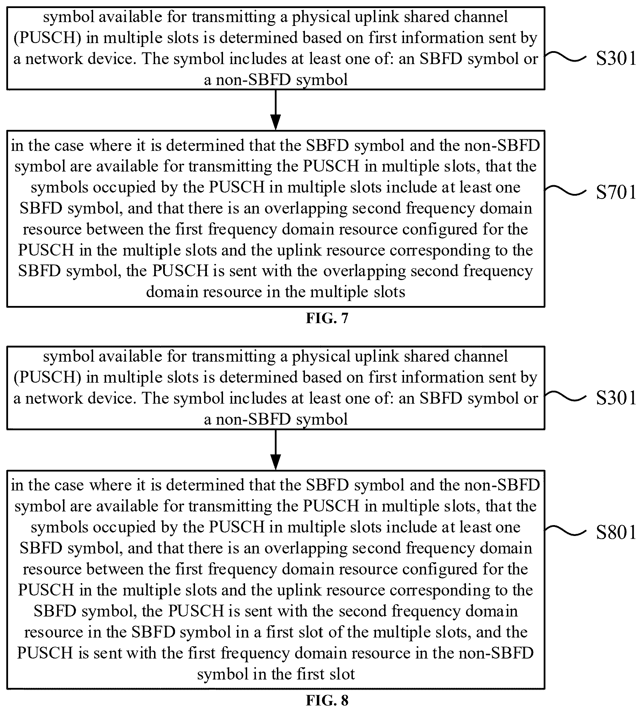

FIG. 7 is a schematic flowchart illustrating another method for determining transmission according to an embodiment of the disclosure. The method for determining transmission illustrated in this embodiment may be performed by a terminal. As illustrated in FIG. 7, the method for determining transmission further includes the following.

In step S701, in the case where it is determined that the SBFD symbol(s) and the non-SBFD symbol(s) are available for transmitting the PUSCH in multiple slots, that the symbols occupied by the PUSCH in multiple slots include at least one SBFD symbol, and that there is an overlapping second frequency domain resource between the first frequency domain resource configured for the PUSCH in the multiple slots and the uplink resource corresponding to the SBFD symbol(s), the PUSCH is sent with the overlapping second frequency domain resource in the multiple slots.

It should be noted that the embodiment illustrated in FIG. 7 may be implemented separately or in combination with at least one other embodiment in the disclosure. Whether being implemented separately or being implemented in combination with at least one other embodiment may be selected as needed, which is not limited in the disclosure. This embodiment may be applicable to the case where the first information is based on an explicit indication.

In an embodiment, in the case where the terminal determines that the SBFD symbol(s) and the non-SBFD symbol(s) are available for transmitting the PUSCH in multiple slots the terminal may further determine whether there is an overlapping second frequency domain resource FD#2 between the first frequency domain resource FD#1 configured for PUSCH in multiple slots and the uplink resource corresponding to the SBFD symbol(s).

In the case where there is an overlapping second frequency domain resource FD#2 between FD#1 and the uplink resource corresponding to the SBFD symbol(s), the terminal may send the PUSCH transmitted in multiple slots with FD#2 in the multiple slots used for sending the PUSCH.

Since FD#2 is within the uplink resource corresponding to the SBFD symbol(s), sending the PUSCH transmitted in multiple slots with FD#2 may ensure that the frequency domain resource for sending the PUSCH in the SBFD symbol(s) in each slot will not conflict with the frequency domain resource other than the uplink resource. Correspondingly, the network device may receive the PUSCH transmitted in multiple slots sent by the terminal only with FD#2 in multiple slots.

FIG. 8 is a schematic flowchart illustrating another method for determining transmission according to an embodiment of the disclosure. The method for determining transmission illustrated in this embodiment may be performed by a terminal. As illustrated in FIG. 8, the method for determining transmission also includes the following.

In step S801, in the case where it is determined that the SBFD symbol(s) and the non-SBFD symbol(s) are available for transmitting the PUSCH in multiple slots, that the symbols occupied by the PUSCH in multiple slots include at least one SBFD symbol, and that there is an overlapping second frequency domain resource between the first frequency domain resource configured for the PUSCH in the multiple slots and the uplink resource corresponding to the SBFD symbol(s), the PUSCH is sent with the second frequency domain resource in the SBFD symbol(s) in a first slot of the multiple slots, and the PUSCH is sent with the first frequency domain resource in the non-SBFD symbol(s) in the first slot.

It should be noted that the embodiment illustrated in FIG. 8 may be implemented separately or in combination with at least one other embodiment in the disclosure. Whether being implemented separately or being implemented in combination with at least one other embodiment may be selected as needed, which is not limited in the disclosure.

In an embodiment, in the case where the terminal determines that the SBFD symbol(s) and the non-SBFD symbol(s) are available for transmitting the PUSCH in multiple slots, the terminal may further determine whether there is an overlapping second frequency domain resource FD#2 between the first frequency domain resource FD#1 configured for PUSCH in the first slot of the multiple slots and the uplink resource corresponding to the SBFD symbol(s).

In the case where there is an overlapping second frequency domain resource FD#2 between FD#1 and the uplink resource corresponding to the SBFD symbol(s), the terminal may send the PUSCH transmitted in multiple slots with FD#2 in the SBFD symbol(s) in the first slot, and may send the PUSCH transmitted in multiple slots with FD#1 in the non-SBFD symbol(s) in the first slot.

Since FD#2 is within the uplink resource corresponding to the SBFD symbol(s), sending the PUSCH transmitted in multiple slots with FD#2 in the SBFD symbol(s) may ensure that the frequency domain resource for sending the PUSCH in the SBFD symbol(s) in each slot will not conflict with the frequency domain resource other than the uplink resource, and there is no frequency domain resource other than the uplink resource in the non-SBFD symbol(s). Therefore, the PUSCH transmitted in multiple slots is capable of being sent with FD#1 in the non-SBFD symbol(s), which will not conflict with the frequency domain resource other than the uplink resource and is conducive to ensuring that the frequency domain resource are fully utilized. Correspondingly, the network device may receive the PUSCH transmitted in multiple slots sent by the terminal only with FD#2 in the SBFD symbol(s) in the first slot, and may receive the PUSCH transmitted in multiple slots sent by the terminal with FD#1 in the non-SBFD symbol(s) in the first slot.

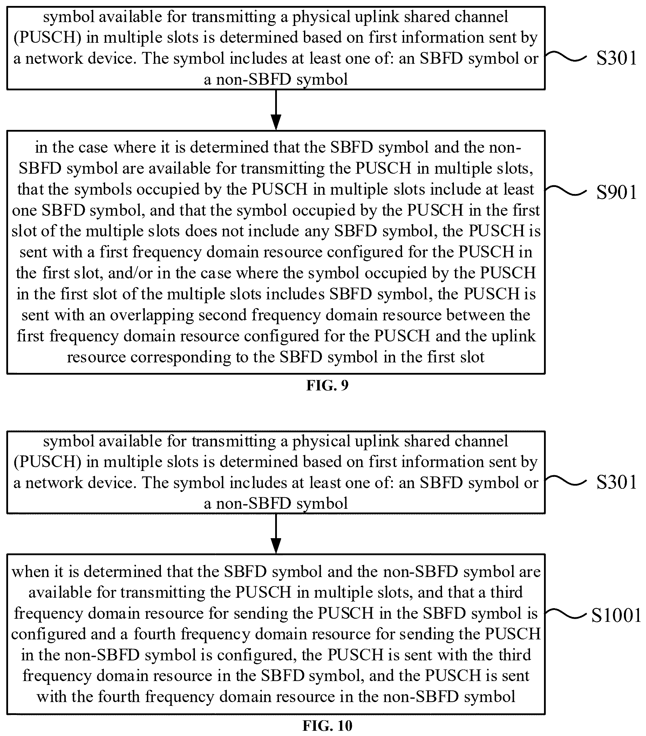

FIG. 9 is a schematic flowchart illustrating another method for determining transmission according to an embodiment of the disclosure. The method for determining transmission illustrated in this embodiment may be performed by a terminal. As illustrated in FIG. 9, the method for determining transmission further includes the following.

In step S901, in the case where it is determined that the SBFD symbol(s) and the non-SBFD symbol(s) are available for transmitting the PUSCH in multiple slots, that the symbols occupied by the PUSCH in multiple slots include at least one SBFD symbol, and that the symbol(s) occupied by the PUSCH in the first slot of the multiple slots does not include any SBFD symbol, the PUSCH is sent with a first frequency domain resource configured for the PUSCH in the first slot, and/or in the case where the symbol(s) occupied by the PUSCH in the first slot of the multiple slots includes SBFD symbol(s), the PUSCH is sent with an overlapping second frequency domain resource between the first frequency domain resource configured for the PUSCH and the uplink resource corresponding to the SBFD symbol(s) in the first slot.

It should be noted that the embodiment illustrated in FIG. 9 may be implemented separately or in combination with at least one other embodiment in the disclosure. Whether being implemented separately or being implemented in combination with at least one other embodiment may be selected as needed, which is not limited in the disclosure.

In an embodiment, in the case where the terminal determines that the SBFD symbol(s) and the non-SBFD symbol(s) are available for transmitting the PUSCH in multiple slots, and that the symbols occupied by the PUSCH in multiple slots include at least one SBFD symbol, the terminal may further determine whether the symbol(s) occupied by the PUSCH in the first slot of the multiple slots includes SBFD symbol(s).

For example, in the case where it is determined that the symbol(s) occupied by PUSCH in the first slot does not include any SBFD symbol, the first frequency domain resource configured for PUSCH in the first slot will not conflict with the frequency domain resource other than the uplink resource. Therefore, the terminal may send the PUSCH with the first frequency domain resource configured for the PUSCH in the first slot.

For example, in the case where it is determined that the symbol(s) occupied by the PUSCH in the first slot includes SBFD symbol(s), the terminal may further determine an overlapping second frequency domain resource between the first frequency domain resource configured for the PUSCH and an uplink resource corresponding to the SBFD symbol(s) in the first slot. Since the second frequency domain resource is within the uplink resource corresponding to the SBFD symbol(s), they will not conflict with the frequency domain resource other than the uplink resource. Therefore, the terminal may send the PUSCH with the second frequency domain resource in the first slot.

FIG. 10 is a schematic flowchart illustrating another method for determining transmission according to an embodiment of the disclosure. The method for determining transmission illustrated in this embodiment may be performed by a terminal. As illustrated in FIG. 10, the method for determining transmission further includes the following.

In step S1001, when it is determined that the SBFD symbol(s) and the non-SBFD symbol(s) are available for transmitting the PUSCH in multiple slots, and that a third frequency domain resource for sending the PUSCH in the SBFD symbol(s) is configured and a fourth frequency domain resource for sending the PUSCH in the non-SBFD symbol(s) is configured, the PUSCH is sent with the third frequency domain resource in the SBFD symbol(s), and the PUSCH is sent with the fourth frequency domain resource in the non-SBFD symbol(s).

It should be noted that the embodiment illustrated in FIG. 10 may be implemented separately or in combination with at least one other embodiment in the disclosure. Whether being implemented separately or being implemented in combination with at least one other embodiment may be selected as needed, which is not limited in the disclosure.

In an embodiment, in the case where the terminal determines that the SBFD symbol(s) and the non-SBFD symbol(s) are available for transmitting the PUSCH in multiple slots, and that the symbols occupied by the PUSCH in multiple slots include at least one SBFD symbol, the terminal may further determine whether the network device is configured with the third frequency domain resource for sending the PUSCH in the SBFD symbol(s) and configured with the fourth frequency domain resource for sending the PUSCH in the non-SBFD symbol(s). The third frequency domain resource does not include a frequency domain resource other than the uplink resource corresponding to the SBFD symbol(s).

In the case where it is determined that the network device is configured with the third frequency domain resource for sending the PUSCH in the SBFD symbol(s) and configured with the fourth frequency domain resource for sending the PUSCH in the non-SBFD symbol(s), since the third frequency domain resource does not include the frequency domain resource other than the uplink resource corresponding to the SBFD symbol(s), there will be no conflict between the third frequency domain resource and the frequency domain resource other than the uplink resource. Therefore, the PUSCH transmitted in multiple slots may be sent with the third frequency domain resource in the SBFD symbol(s) occupied by the PUSCH in multiple slots for transmitting the PUSCH. Correspondingly, the network device may receive the PUSCH transmitted in multiple slots sent by the terminal with the third frequency domain resource in the SBFD symbol(s) occupied by the PUSCH in multiple slots for transmitting the PUSCH.

However, there is no frequency domain resource other than the uplink resource in the non-SBFD symbol(s), and thus the fourth frequency domain resource will not conflict with the frequency domain resource other than the uplink resource. Therefore, the PUSCH is capable of being sent with the fourth frequency domain resource in the non-SBFD symbol(s) occupied by the PUSCH in multiple slots for transmitting the PUSCH. Correspondingly, the network device may receive the PUSCH transmitted in multiple slots sent by the terminal with the fourth frequency domain resource in the non-SBFD symbol(s) occupied by the PUSCH in multiple slots for transmitting the PUSCH.

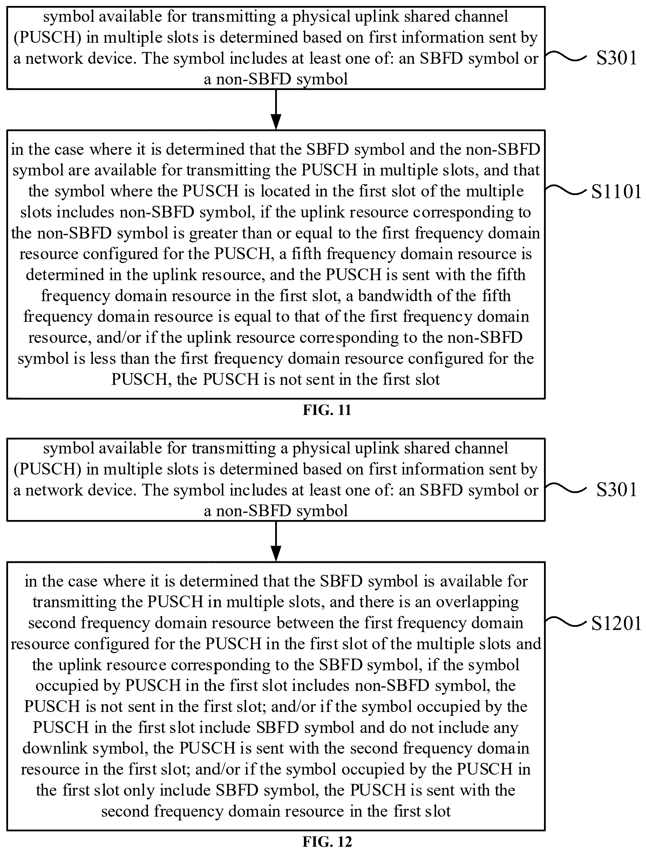

FIG. 11 is a schematic flowchart illustrating another method for determining transmission according to an embodiment of the disclosure. The method for determining transmission illustrated in this embodiment may be performed by a terminal. As illustrated in FIG. 11, the method for determining transmission further includes the following.

In step S1101, in the case where it is determined that the SBFD symbol(s) and the non-SBFD symbol(s) are available for transmitting the PUSCH in multiple slots, and that the symbol(s) where the PUSCH is located in the first slot of the multiple slots includes non-SBFD symbol(s), if the uplink resource corresponding to the non-SBFD symbol(s) is greater than or equal to the first frequency domain resource configured for the PUSCH, a fifth frequency domain resource is determined in the uplink resource, and the PUSCH is sent with the fifth frequency domain resource in the first slot, a bandwidth of the fifth frequency domain resource is equal to that of the first frequency domain resource, and/or if the uplink resource corresponding to the non-SBFD symbol(s) is less than the first frequency domain resource configured for the PUSCH, the PUSCH is not sent in the first slot.

It should be noted that the embodiment illustrated in FIG. 11 may be implemented separately or in combination with at least one other embodiment in the disclosure. Whether being implemented separately or being implemented in combination with at least one other embodiment may be selected as needed, which is not limited in the disclosure.

In an embodiment, in the case where the terminal determines that the SBFD symbol(s) and the non-SBFD symbol(s) are available for transmitting the PUSCH in multiple slots, and that the symbol(s) where the PUSCH is located in the first slot of the multiple slots includes non-SBFD symbol(s), the terminal may further determine a relationship between the uplink resource corresponding to the non-SBFD symbol(s) and the first frequency domain resource configured for the PUSCH.

In the case where the uplink resource corresponding to the non-SBFD symbol(s) is greater than or equal to the first frequency domain resource configured for the PUSCH, a frequency domain resource (for example, called the fifth frequency domain resource) equal to the bandwidth of the first frequency domain resource may be determined in the uplink resource corresponding to the non-SBFD symbol(s), and the PUSCH is sent with the fifth frequency domain resource in the first slot. Since the bandwidth of the fifth frequency domain resource is equal to the bandwidth of the first frequency domain resource, it is conducive to ensuring the smooth transmission of the PUSCH. Correspondingly, the network device may receive the PUSCH transmitted in multiple slots with the fifth frequency domain resource in the first slot.

In an embodiment, the bandwidth of the first frequency domain resource may be determined first. The bandwidth may be represented by the number of resource blocks (RBs), for example, k1 RBs.

For example, a starting RB of the uplink resource corresponding to the first slot may be used as a starting point, k1 consecutive RBs may be determined in the uplink resource, and the determined k1 RBs may be used as the fifth frequency domain range.

For example, an ending RB of the uplink resource corresponding to the first slot may be used as an ending point, k1 consecutive RBs may be determined in the uplink resource, and the determined k1 RBs may be used as the fifth frequency domain range.

For example, a frequency domain range with a duration of k2 continuous RBs may be determined in an activated bandwidth part (BWP) as the sixth frequency domain resource, and overlapping k1 RBs between the sixth frequency domain resource and the uplink resource corresponding to the non-SBFD symbol(s) may be determined as the fifth frequency domain range.

In the case where the uplink resource corresponding to the non-SBFD symbol(s) is smaller than the first frequency domain resource configured for the PUSCH, a frequency domain resource equal to the bandwidth of the first frequency domain resource cannot be determined in the uplink resource corresponding to the non-SBFD symbol(s), and the terminal does not send the PUSCH in the first slot. Correspondingly, the network device cannot receive the PUSCH transmitted in multiple slots sent by the terminal in the first slot.

FIG. 12 is a schematic flowchart illustrating another method for determining transmission according to an embodiment of the disclosure. The method for determining transmission illustrated in this embodiment may be performed by a terminal. As illustrated in FIG12, the method for determining transmission further includes the following.

In step S1201, in the case where it is determined that the SBFD symbol(s)is/are available for transmitting the PUSCH in multiple slots, and there is an overlapping second frequency domain resource between the first frequency domain resource configured for the PUSCH in the first slot of the multiple slots and the uplink resource corresponding to the SBFD symbol(s), if the symbol(s) occupied by PUSCH in the first slot includes non-SBFD symbol(s), the PUSCH is not sent in the first slot; and/or if the symbol(s) occupied by the PUSCH in the first slot include SBFD symbol(s) and do not include any downlink symbol, the PUSCH is sent with the second frequency domain resource in the first slot; and/or if the symbol(s) occupied by the PUSCH in the first slot only include SBFD symbol(s), the PUSCH is sent with the second frequency domain resource in the first slot.

It should be noted that the embodiment illustrated in FIG. 12 may be implemented separately or in combination with at least one other embodiment in the disclosure. The specific selection can be made as needed, and the present disclosure is not limited thereto. Whether being implemented separately or being implemented in combination with at least one other embodiment may be selected as needed, which is not limited in the disclosure.

In an embodiment, in the case where the terminal determines that only the SBFD symbol(s) is/are available for transmitting the PUSCH in multiple slots, and that there is an overlapping second frequency domain resource between the first frequency domain resource configured for the PUSCH in the first slot of the multiple slots and the uplink resource corresponding to the SBFD symbol(s), the terminal may further determine whether the symbol(s) occupied by the PUSCH in the first slot include non-SBFD symbol(s).

For example, in the case where the symbol(s) occupied by the PUSCH in the first slot includes the non-SBFD symbol(s), if the PUSCH is sent in the first slot, the symbols occupied by the PUSCH will include the non-SBFD symbol(s), which does not meet the limitation that only the SBFD symbol(s) is/are available for transmitting the PUSCH in multiple slots. Therefore, the terminal may not send the PUSCH transmitted in multiple slots in the first slot. Correspondingly, the network device may not receive the PUSCH transmitted in multiple slots sent by the terminal in the first slot.

For example, in the case where the symbol(s) occupied by the PUSCH in the first slot includes SBFD symbol(s) and does not include any downlink symbol, if the PUSCH is sent in the first slot, the symbols occupied by the PUSCH will include the SBFD symbol(s), which meets the limitation that only the SBFD symbol(s) is/are available for transmitting the PUSCH in multiple slots. Therefore, the terminal may send the PUSCH transmitted in multiple slots with the second frequency domain resource in the first slot. Correspondingly, the network device may receive the PUSCH transmitted in multiple slots sent by the terminal with the second frequency domain resource in the first slot.

For example, in the case where the symbol(s) occupied by the PUSCH in the first slot include only the SBFD symbol(s), if the PUSCH is sent in the first slot, the symbols occupied by the PUSCH will only include the SBFD symbols, which meets the limitation that only the SBFD symbol(s) is/are available for transmitting the PUSCH in multiple slots. Therefore, the terminal may send the PUSCH transmitted in multiple slots with the second frequency domain resource in the first slot. Correspondingly, the network device may receive the PUSCH transmitted in multiple slots sent by the terminal with the second frequency domain resource in the first slot.

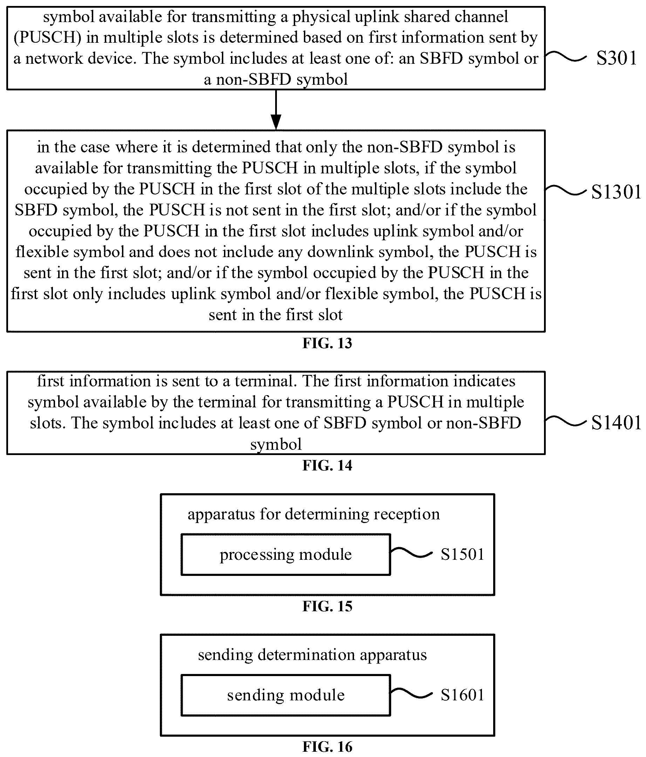

FIG. 13 is a schematic flowchart illustrating another method for determining transmission according to an embodiment of the disclosure. The method for determining transmission illustrated in this embodiment may be performed by a terminal. As illustrated in FIG. 13, the method for determining transmission further includes the following.

In step S1301, in the case where it is determined that only the non-SBFD symbol(s) is/are available for transmitting the PUSCH in multiple slots, if the symbol(s) occupied by the PUSCH in the first slot of the multiple slots include the SBFD symbol(s), the PUSCH is not sent in the first slot; and/or if the symbol(s) occupied by the PUSCH in the first slot includes uplink symbol(s) and/or flexible symbol(s) and does not include any downlink symbol, the PUSCH is sent in the first slot; and/or if the symbol(s) occupied by the PUSCH in the first slot only includes uplink symbol(s) and/or flexible symbol(s), the PUSCH is sent in the first slot.

It should be noted that the embodiment illustrated in FIG. 13 may be implemented separately or in combination with at least one other embodiment in the disclosure. Whether being implemented separately or being implemented in combination with at least one other embodiment may be selected as needed, which is not limited in the disclosure.

In an embodiment, in the case where determining that only the non-SBFD symbol(s) is/are available for transmitting the PUSCH in multiple slots, the terminal may further determine the symbols occupied by the PUSCH in the first slot.

For example, in the case where the symbol(s) occupied by PUSCH in the first slot includes the SBFD symbols, if the PUSCH is sent in the first slot, the symbols occupied by the PUSCH will include the SBFD symbols, which does not meet the limitation that only the non-SBFD symbol(s) is/are available for transmitting the PUSCH in multiple slots. Therefore, the terminal may not send the PUSCH transmitted in multiple slots in the first slot. Correspondingly, the network device cannot receive the PUSCH transmitted in multiple slots sent by the terminal in the first slot.

For example, in the case where the symbol(s) occupied by the PUSCHs in the first slot includes uplink symbol(s) and/or flexible symbol(s), but does not include any downlink symbol, if the PUSCH is sent in the first slot, the symbols occupied by the PUSCH will include the uplink symbol(s) and/or the flexible symbol(s), but does not include any downlink symbol, and the non-SBFD symbols include downlink symbols, flexible symbols, and uplink symbols, which meets the limitation that only the non-SBFD symbol(s) is/are available for transmitting the PUSCH in multiple slots. Therefore, the terminal may send the PUSCH transmitted in multiple slots in the first slot. Correspondingly, the network device may receive the PUSCH transmitted in multiple slots sent by the terminal in the first slot.

For example, in the case where the symbol(s) occupied by the PUSCH in the first slot only includes uplink symbol(s) and/or flexible symbol(s), if the PUSCH is sent in the first slot, the symbols occupied by the PUSCH will also include only uplink symbol(s) and/or flexible symbol(s), which meets the limitation that only the non-SBFD symbol(s) is/are available for transmitting the PUSCH in multiple slots. Therefore, the terminal may send the PUSCH transmitted in multiple slots in the first slot. Correspondingly, the network device may receive the PUSCH transmitted in multiple slots sent by the terminal in the first slot.

FIG. 14 is a schematic flowchart illustrating a method for indicating transmission according to an embodiment of the disclosure. The method for indicating transmission illustrated in this embodiment may be performed by a network device, and the network device may communicate with a terminal. The network device includes, but is not limited to, base stations in communication systems, such as a 4G base station, a 5G base station, or a 6G base station. The terminal includes, but is not limited to, a mobile phone, a tablet computer, a wearable device, a sensor, an Internet of Things device, and other communication devices.

As illustrated in FIG. 14, the method for indicating transmission may include the following.

In step S1401, first information is sent to a terminal. The first information indicates symbol(s) available for transmitting a PUSCH by the terminal in multiple slots. The symbol(s) includes at least one of SBFD symbol(s) or non-SBFD symbol(s).

In an embodiment, the network device may send to the terminal the first information indicating the symbol(s) available for transmitting the PUSCH by the terminal in multiple slots. The symbol(s) includes at least one of: the SBFD symbol(s) or the non-SBFD symbol(s). That is, the first information may indicate that the SBFD symbol(s) and the non-SBFD symbol(s) are available for transmitting the PUSCH by the terminal in multiple slots, only the SBFD symbol(s) is/are available for transmitting the PUSCH by the terminal in multiple slots, or only the non-SBFD symbol(s) is/are available for transmitting the PUSCH by the terminal in multiple slots.

For example, the network device may determine only the SBFD symbol(s) is/are available for receiving the PUSCH sent by the terminal in multiple slots, and then indicate through the first information that only the SBFD symbol(s) is/are available for transmitting the PUSCH by the terminal in the plurality of slots. Or, the network device may determine that only the non-SBFD symbol(s) is/are available for receiving the PUSCH sent by the terminal in multiple slots and then indicate through the first information that the non-SBFD symbol(s) is/are available for transmitting the PUSCH by the terminal in the plurality of slots. Or the network device may determine that the SBFD symbol(s) and the non-SBFD symbol(s) are available for receiving the PUSCH sent by the terminal in multiple slots and then indicate through the first information that the SBFD symbol(s) and the non-SBFD symbol(s) are available for transmitting the PUSCH by the terminal in the plurality of slots.

Based on this, it may be ensured that the symbol(s), determined by the terminal, available for transmitting the PUSCH in multiple slots the same as the symbol(s), determined by the network device, available for receiving the PUSCH sent by the terminal in multiple slots, thereby achieving consistent understanding between the terminal and the network device, which is conducive to ensuring the communication quality between the network device and the terminal.

It should be noted that the embodiments of the disclosure mainly illustrate the technical solution in the case where the SBFD symbol is a symbol configured with an uplink subband, but the technical solution of the disclosure may also be applied to the case where the SBFD symbol is a symbol configured with a downlink subband.

In an embodiment, the first information includes at least one of: frequency domain resource information; or an indication field.

In an embodiment, in the case where it is determined that the symbol(s) available for receiving the PUSCH sent by the terminal in multiple slots includes the SBFD symbol(s) and the non-SBFD symbol(s), a frequency domain resource configured for the PUSCH by the frequency domain resource information is within an uplink resource corresponding to the SBFD symbol(s); and/or in the case where it is determined that symbol(s) available for receiving the PUSCH sent by the terminal in multiple slots includes the SBFD symbol(s) or the non-SBFD symbol(s), the frequency domain resource configured for the PUSCH by the frequency domain resource information includes a frequency domain resource other than the uplink resource corresponding to the SBFD symbol.

As illustrated in FIG. 4A, the network device may determine that the SBFD symbol(s) and the non-SBFD symbol(s) are available for receiving the PUSCH sent by the terminal in multiple slots, and then the frequency domain resource information sent by the network device to the terminal may configure that the frequency domain resource of the PUSCH transmitted in multiple slots is FD#1, and FD#1 is within the uplink resource corresponding to the SBFD symbol. In the case where the terminal determines that FD#1 is within the uplink resource corresponding to the SBFD symbol, the terminal may further determine that the SBFD symbol(s) and the non-SBFD symbol(s) are available for transmitting the PUSCH in multiple slots. For example, it is determined that symbol #8 to symbol #13 are available for transmitting the PUSCH in multiple slots. Correspondingly, the network device receives the PUSCH transmitted in multiple slots sent by the terminal in symbol #8 to symbol #13.

As illustrated in FIG. 4B, the network device may determine that the non-SBFD symbol(s) is/are available for receiving the PUSCH sent by the terminal in multiple slots, and then the frequency domain resource information sent by the network device to the terminal may configure that the frequency domain resource for the PUSCH transmitted in multiple slots is FD#1, and FD#1 includes a frequency domain resource other than the uplink resource corresponding to the SBFD symbol(s). In the case where the terminal determines that FD#1 includes the frequency domain resource other than the uplink resource corresponding to the SBFD symbol(s) (for example, there is a resource conflict between the FD#1 and the frequency domain resource other than the uplink resource in FIG. 4B), the terminal may further determine that only the SBFD symbol(s) or the non-SBFD symbol(s) is/are available for transmitting the PUSCH in multiple slots. For example, the terminal may determine that only the non-SBFD symbols (symbol #11 to symbol #13) are available for transmitting the PUSCH in multiple slots. Correspondingly, the network device receives, in symbol #11 to symbol #13, the PUSCH transmitted in multiple slots sent by the terminal.

It should be noted that in the case where the network device determines that only the SBFD symbol(s) is/are available for receiving the PUSCH sent by the terminal in multiple slots, the frequency domain resource information may also configure that FD#1 includes the frequency domain resource other than the uplink resource corresponding to the SBFD symbol(s). However, in this case, when the symbol(s) where a first PUSCH of the PUSCH transmitted in multiple slots is located needs to include SBFD symbol(s) or the symbol(s) where the first PUSCH of the PUSCH transmitted in multiple slots is located is/are all SBFD symbol(s), the terminal may determine that the SBFD symbol(s) is/are available for transmitting the PUSCH in multiple slots.

In an embodiment, determining that the SBFD symbol(s) or the non-SBFD symbol(s) is/are available for receiving the PUSCH sent by the terminal in multiple slots includes at least one of the following:
symbol(s) where the first PUSCH of the PUSCH transmitted in multiple slots is located including SBFD symbol(s), determining that only the SBFD symbol(s) is/are available for receiving the PUSCH in multiple slots; or
symbol(s) where the first PUSCH of the PUSCH transmitted in multiple slots is located being all non-SBFD symbol(s), determining that only the non-SBFD symbol(s) is/are available for receiving the PUSCH in multiple slots.

For example, the network device may determine a slot where the first PUSCH of the PUSCH transmitted in multiple slots is located, and determine the symbol(s) where the first PUSCH is located in the slot. In the case where the symbol(s) where the first PUSCH is located in the slot includes SBFD symbol(s), the network device may determine that only the SBFD symbol(s) is/are available for receiving the PUSCH sent by the terminal in multiple slots. In the case where the symbol(s) where the first PUSCH is located in the slot is/are all non-SBFD symbol(s), the network device may determine that only the non-SBFD symbol(s) is/are available for receiving the PUSCH sent by the terminal in multiple slots.

In an embodiment, determining that only the SBFD symbol(s) or only the non-SBFD symbol(s) is/are available for receiving the PUSCH sent by the terminal in multiple slots includes at least one of the following:
symbol(s) where the first PUSCH of the PUSCH transmitted in multiple slots is located being all SBFD symbol(s), determining that only the SBFD symbol(s) is/are available for receiving the PUSCH sent by the terminal in multiple slots; or
symbol(s) where the first PUSCH of the PUSCH transmitted in multiple slots is located including non-SBFD symbol(s), determining that only the non-SBFD symbol(s) is/are available for receiving the PUSCH sent by the terminal in multiple slots.

For example, the network device may determine a slot where the first PUSCH of the PUSCH transmitted in multiple slots is located, and determine the symbol(s) where the first PUSCH is located in the slot. In the case where all of the symbol(s) where the first PUSCH is located in the slot are SBFD symbol(s), the network device may determine that t only the SBFD symbol(s) is/are available for receiving the PUSCH sent by the terminal in multiple slots. In the case where the symbol(s) where the first PUSCH is located in the slot includes non-SBFD symbol(s), the network device may determine that only the non-SBFD symbol(s) is/are available for receiving the PUSCH sent by the terminal in multiple slots.

In an embodiment, in the case where it is determined that the symbol(s) available for receiving the PUSCH sent by the terminal in multiple slots includes the SBFD symbol(s) and the non-SBFD symbol(s), and that the frequency domain resource configured for the PUSCH by the frequency domain resource information includes a frequency domain resource for sending the PUSCH in the SBFD symbol(s) and a frequency domain resource for sending the PUSCH in the non-SBFD symbol(s), it is determined that the SBFD symbol(s) and the non-SBFD symbol(s) are available for receiving the PUSCH sent by the terminal in multiple slots.

In an embodiment, in the case where the network device determines that the symbol(s) available for receiving the PUSCH sent by the terminal in multiple slots includes the SBFD symbol(s) and the non-SBFD symbol(s), the first information sent to the terminal may include the frequency domain resource information, and the frequency domain resource information may be used for configuring the frequency domain resource for sending the PUSCH in the SBFD symbol(s) and the frequency domain resource for sending the PUSCH in the non-SBFD symbol(s). The frequency domain resource for receiving the PUSCH in the SBFD symbol(s) does not include a frequency domain resource other than the uplink resource corresponding to the SBFD symbol(s).

In this case, the network device may receive the PUSCH transmitted in multiple slots sent by the terminal in the SBFD symbol(s) and the non-SBFD symbol(s). The terminal may determine, based on the frequency domain resource information, that the SBFD symbol(s) and the non-SBFD symbol(s) are available for transmitting the PUSCH in multiple slots.

For example, in the non-SBFD symbol(s), the PUSCH sent by the terminal may be received with the frequency domain resource used for sending the PUSCH in the non-SBFD symbol(s), while in the SBFD symbol(s), the PUSCH sent by the terminal may be received with the frequency domain resource used for sending the PUSCH in the SBFD symbol(s).

In an embodiment, the indication field occupies 1 bit or 2 bits. It should be noted that the number of bits occupied by the indication field is not limited to 1 or 2, and may also be other numbers. The following embodiments mainly illustrate the technical solution of the disclosure for the cases where the indication field occupies 1 bit and the indication field occupies 2 bits.

In an embodiment, in the case where it is determined that symbol(s) available for receiving the PUSCH sent by the terminal in multiple slots includes the SBFD symbol(s) and the non-SBFD symbol(s), the indication field indicates that the SBFD symbol(s) and the non-SBFD symbol(s) are available for transmitting the PUSCH in multiple slots; and/or in the case where it is determined that symbol(s) available for receiving the PUSCH sent by the terminal in multiple slots includes the SBFD symbol(s) or the non-SBFD symbol(s), the indication field indicates that only the SBFD symbol(s) or only the non-SBFD symbol(s) are available for transmitting the PUSCH in multiple slots.

In an embodiment, in the case where the indication field occupies 1 bit, the indication field may indicate to the terminal that the SBFD symbol(s) and in the non-SBFD symbol(s) are available for transmitting the PUSCH in multiple slots, or indicate to the terminal that only the SBFD symbol(s) or only the non-SBFD symbol(s) is/are available for transmitting the PUSCH in multiple slots.

For example, in the case where the network device determines that the symbol(s) available for receiving the PUSCH sent by the terminal in multiple slots includes the SBFD symbol(s) and the non-SBFD symbol(s), the value of the 1-bit indication field sent to the terminal is 1, indicating that the SBFD symbol(s) and the non-SBFD symbol(s) are available for transmitting the PUSCH by the terminal in multiple slots.

For example, in the case where the network device determines that the symbol(s) available for receiving the PUSCH sent by the terminal in multiple slots includes the SBFD symbol(s) or the non-SBFD symbol(s), the value of the 1-bit indication field sent to the terminal is 0, indicating that only the SBFD symbol(s) or only the non-SBFD symbol(s) is/are available for transmitting the PUSCH by the terminal in multiple slots.

In an embodiment, determining that only the SBFD symbol(s) or only the non-SBFD symbol(s) is/are available for receiving the PUSCH sent by the terminal in multiple slots includes at least one of the following:
symbol(s) where a first PUSCH of the PUSCH transmitted in multiple slots is located including the SBFD symbol(s), determining that only the SBFD symbol(s) is/are available for receiving the PUSCH sent by the terminal in multiple slots; or
symbol(s) where the first PUSCH of the PUSCH transmitted in multiple slots is located being all non-SBFD symbol(s), determining that only the non-SBFD symbol(s) is/are available for receiving the PUSCH sent by the terminal in multiple slots.

For example, the network device may determine the slot where the first PUSCH of the PUSCH transmitted in multiple slots is located and determine the symbol(s) where the first PUSCH is located in the slot. In the case where the symbol(s) in which the first PUSCH is located in the slot includes the SBFD symbol(s), the network device may determine that only the SBFD symbol(s) is/are available for receiving the PUSCH sent by the terminal in multiple slots. In the case where the symbol(s) in which the first PUSCH is located in the slot is/are all non-SBFD symbol(s), the network device may determine that only the non-SBFD symbol(s) is/are available for receiving the PUSCH sent by the terminal in multiple slots.

In an embodiment, determining that only in the SBFD symbol(s) or only the non-SBFD symbol(s) is/are available for receiving the PUSCH sent by the terminal in multiple slots includes at least one of the following:
symbol(s) in which the first PUSCH of the PUSCH transmitted in multiple slots is located being all SBFD symbol(s), determining that only the SBFD symbol(s) is/are available for receiving the PUSCH sent by the terminal in multiple slots; or
symbol(s) in which the first PUSCH of the PUSCH transmitted in multiple slots is located including non-SBFD symbol(s), determining that only the non-SBFD symbol(s) is/are available for receiving the PUSCH sent by the terminal in multiple slots.

For example, the network device may determine the slot where the first PUSCH of the PUSCH transmitted in multiple slots is located, and determine the symbol(s) in which the first PUSCH is located in the slot. In the case where all of the symbol(s) in which the first PUSCH is located in the slot is the SBFD symbol(s), the network device may determine that only the SBFD symbol(s) is/are available for receiving the PUSCH sent by the terminal in multiple slots. In the case where the symbol(s) in which the first PUSCH is located in the slot includes the non-SBFD symbol(s), the network device may determine that only the non-SBFD symbol(s) is/are available for receiving the PUSCH sent by the terminal in multiple slots.

In an embodiment, determining that t only the SBFD symbol(s) or the non-SBFD symbol(s) is/are available for receiving the PUSCH sent by the terminal in multiple slots includes at least one of the following:
all of symbol(s) in which the first PUSCH of the PUSCH transmitted in multiple slots is located being SBFD symbol(s), determining that only the SBFD symbol(s) is/are available for receiving the PUSCH sent by the terminal in multiple slots; or
all of symbol(s) in which the first PUSCH of the PUSCH transmitted in multiple slots is located being non-SBFD symbol(s), determining that only the non-SBFD symbol(s) is/are available for receiving the PUSCH sent by the terminal in multiple slots.

For example, the network device may determine the slot where the first PUSCH of the PUSCH transmitted in multiple slots is located, and determine the symbol(s) where the first PUSCH is located in the slot. In the case where all of the symbol(s) where the first PUSCH is located in the slot is the SBFD symbol(s), the network device may determine that only the SBFD symbol(s) is/are available for receiving the PUSCH sent by the terminal in multiple slots. In the case where all of the symbol(s) where the first PUSCH is located in the slot is the non-SBFD symbol(s), the network device may determine that only the non-SBFD symbol(s) is/are available for receiving the PUSCH sent by the terminal in multiple slots.

In an embodiment, determining symbol(s) available for transmitting the PUSCH in multiple slots includes at least one of the following:
in the case where it is determined that symbol(s) available for receiving the PUSCH sent by the terminal in multiple slots only includes the SBFD symbol(s), indicating that only the SBFD symbol(s) is/are available for transmitting the PUSCH by the terminal in multiple slots, in which the indication field takes a first value or a second value, or the indication field is empty;
in the case where it is determined that symbol(s) available for receiving the PUSCH sent by the terminal in multiple slots only includes the non-SBFD symbol(s), indicating that only the non-SBFD symbol(s) is/are available for transmitting the PUSCH by the terminal in multiple slots, in which the indication field takes a first value or a second value, or the indication field is empty; or
in the case where it is determined that symbol(s) available for receiving the PUSCH sent by the terminal in multiple slots includes the SBFD symbol(s) and the non-SBFD symbol(s), indicating that the SBFD symbol(s) and the non-SBFD symbol(s) are available for transmitting the PUSCH by the terminal in multiple slots, in which the indication field takes a first value or a second value, or the indication field is empty.

It is understandable that for cases where the indication field takes the first value, where the indication field takes the second value or where the indication field is empty, the content indicated by the first information is different. The following describes the content indicated by the first information when the indication field takes the first value or the second value, or the indication field is empty through several embodiments, but the correspondence between the content indicated by the first information and cases where the indication field takes the first value or the second value or the indication field is empty is not limited to the following embodiments.

In an embodiment, in the case where the indication field occupies 1 bit, the indication field may indicate to the terminal that the only the SBFD symbol(s) is/are available for transmitting the PUSCH in multiple slots or indicate to the terminal that the only the non-SBFD symbol(s) is/are available for transmitting the PUSCH in multiple slots. In the case where the indication field is empty, the indication field may indicate to the terminal that the SBFD symbol(s) and the non-SBFD symbol(s) are available for transmitting the PUSCH in multiple slots.

For example, the network device determines that only the SBFD symbol(s) is/are available for receiving the PUSCH sent by the terminal in multiple slots, and the value of the 1-bit indication field sent to the terminal is 1, indicating to the terminal that only the SBFD symbol(s) is/are available for transmitting the PUSCH in multiple slots.

For example, the network device determines that only the non-SBFD symbol(s) is/are available for receiving the PUSCH sent by the terminal in multiple slots, and the value of the 1-bit indication field sent to the terminal is 0, indicating to the terminal that only the non-SBFD symbol(s) is/are available for transmitting the PUSCH in multiple slots.

For example, the network device determines that t the SBFD symbol(s) and the non-SBFD symbol(s) are available for receiving the PUSCH sent by the terminal in multiple slots, and the network device may set the indication field to be empty, indicating to the terminal that the SBFD symbol(s) and the non-SBFD symbol(s) are available for transmitting the PUSCH in multiple slots.

In an embodiment, in the case where the indication field occupies 1 bit, the indication field may indicate to the terminal that only the SBFD symbol(s) is/are available for transmitting the PUSCH in multiple slots or indicate to the terminal that both the SBFD symbol(s) and the non-SBFD symbol(s) are available for transmitting the PUSCH in multiple slots. In the case where the indication field is empty, the indication field may indicate to the terminal that only the non-SBFD symbol(s) is/are available for transmitting the PUSCH in multiple slots.

For example, the network device determines that only the SBFD symbol(s) is/are available for receiving the PUSCH sent by the terminal in multiple slots, and the value of the 1-bit indication field sent to the terminal is 1, indicating to the terminal that only the SBFD symbol(s) is/are available for transmitting the PUSCH in multiple slots.

For example, the network device determines that the SBFD symbol(s) and the non-SBFD symbol(s) are available for receiving the PUSCH sent by the terminal in multiple slots, and the value of the 1-bit indication field sent to the terminal is 0, indicating to the terminal that the SBFD symbol(s) and the non-SBFD symbol(s) are available for transmitting the PUSCH in multiple slots.

For example, the network device determines that only the non-SBFD symbol(s) is/are available for receiving the PUSCH sent by the terminal in multiple slots, and the network device may set the indication field to be empty, indicating to the terminal that only the non-SBFD symbol(s) is/are available for transmitting the PUSCH in multiple slots.

In an embodiment, in the case where the indication field occupies 1 bit, the indication field may indicate to the terminal that the SBFD symbol(s) and the non-SBFD symbol(s) are available for transmitting the PUSCH in multiple slots or indicate to the terminal that only the non-SBFD symbol(s) is/are available for transmitting the PUSCH in multiple slots. In the case where the indication field is empty, the indication field may indicate to the terminal that only the SBFD symbol(s) is/are available for transmitting the PUSCH in multiple slots.

For example, the network device determines that the SBFD symbol(s) and the non-SBFD symbol(s) are available for receiving the PUSCH sent by the terminal in multiple slots, and the value of the 1-bit indication field sent to the terminal is 1, indicating that the SBFD symbol(s) and the non-SBFD symbol(s) are available for transmitting the PUSCH by the terminal in multiple slots.

For example, the network device determines that only the non-SBFD symbol(s) is/are available for receiving the PUSCH sent by the terminal in multiple slots, and the value of the 1-bit indication field sent to the terminal is 0, indicating that only the non-SBFD symbol(s) is/are available for transmitting the PUSCH by the terminal in multiple slots.

For example, the network device determines that only the SBFD symbol(s) is/are available for receiving the PUSCH sent by the terminal in multiple slots, and the network device may set the indication field to be empty, indicating that only the SBFD symbol(s) is/are available for transmitting the PUSCH by the terminal in multiple slots.

In an embodiment, in the case where it is determined that symbol(s) available for receiving the PUSCH sent by the terminal in multiple slots includes the SBFD symbol(s) and the non-SBFD symbol(s), the indication field indicates that the SBFD symbol(s) and the non-SBFD symbol(s) are available for transmitting the PUSCH by the terminal in multiple slots; and/or in the case where it is determined that symbol(s) available for receiving the PUSCH sent by the terminal in multiple slots only includes the SBFD symbol(s), the indication field indicates that only the SBFD symbol(s) is/are available for transmitting the PUSCH by the terminal in multiple slots; and/or in the case where it is determined that symbol(s) available for receiving the PUSCH sent by the terminal in multiple slots only includes the non-SBFD symbol(s), the indication field indicates that only the non-SBFD symbol(s) is/are available for transmitting the PUSCH by the terminal in multiple slots.

In an embodiment, in the case where the indication field occupies 2 bits, the indication field may indicate to the terminal that the SBFD symbol(s) and the non-SBFD symbol(s) are available for transmitting the PUSCH in multiple slots, indicate to the terminal that only the non-SBFD symbol(s) is/are available for transmitting the PUSCH in multiple slots, or indicate to the terminal that only the SBFD symbol(s) is/are available for transmitting the PUSCH in multiple slots.

For example, the network device determines that the SBFD symbol(s) and the non-SBFD symbol(s) are available for receiving the PUSCH sent by the terminal in multiple slots, and the value of the 2-bit indication field sent to the terminal is 00, indicating to the terminal that the SBFD symbol(s) and the non-SBFD symbol(s) are available for transmitting the PUSCH in multiple slots.

For example, the network device determines that only the SBFD symbol(s) is/are available for receiving the PUSCH sent by the terminal in multiple slots, and the value of the 2-bit indication field sent to the terminal is 01, indicating to the terminal that only the SBFD symbol(s) is/are available for transmitting the PUSCH in multiple slots.

For example, the network device determines that only the non-SBFD symbol(s) is/are available for receiving the PUSCH sent by the terminal in multiple slots, and the value of the 2-bit indication field sent to the terminal is 10, indicating to the terminal that only the non-SBFD symbol(s) is/are available for transmitting the PUSCH in multiple slots.

It should be noted that that the availability of a certain type of symbols for receiving the PUSCH sent by the terminal in multiple slots in the embodiments of the disclosure does not mean that the network device must receive the PUSCH transmitted in multiple slots sent by the terminal in this type of symbols, but means that the network device is able to receive the PUSCH transmitted in multiple slots sent by the terminal in this type of symbols, but cannot receive the PUSCH transmitted in multiple slots in symbols sent by the terminal other than this type of symbols.

For example, the network device determines that the SBFD symbol(s) and the non-SBFD symbol(s) are available for receiving the PUSCH sent by the terminal in multiple slots, which means that the network device is able to receive the PUSCH transmitted in multiple slots sent by the terminal in the SBFD symbol(s) and in the non-SBFD symbol(s) in each slot where the PUSCH is located, and which does not mean that the network device needs to receive the PUSCH transmitted in multiple slots sent by the terminal in the SBFD symbol(s) and in the non-SBFD symbol(s) in each slot where the PUSCH is located.

For example, the network device determines that only the SBFD symbol(s) is/are available for receiving the PUSCH sent by the terminal in multiple slots, which means that the network device is able to receive the PUSCH transmitted in multiple slots sent by the terminal in the SBFD symbol(s) in each slot where PUSCH is located, but is unable to receive the PUSCH transmitted in multiple slots sent by the terminal in the non-SBFD symbol(s), and which does not mean that the network device needs to receive the PUSCH transmitted in multiple slots sent by the terminal in the SBFD symbol(s) in each slot where the PUSCH is located.

For example, the network device determines that only the non-SBFD symbol(s) is/are available for receiving the PUSCH sent by the terminal in multiple slots, which means that the network device is able to send the PUSCH transmitted in multiple slots sent by the terminal in the non-SBFD symbol(s) in each slot where the PUSCH is located, but is unable to receive the PUSCH transmitted in multiple slots sent by the terminal in the SBFD symbol(s), and which does not mean that the network device needs to receive the PUSCH transmitted in multiple slots sent by the terminal in the non-SBFD symbol(s) in each slot where the PUSCH is located.

It also needs to further determine which symbols in each slot where the PUSCH is located are available to the network device for receiving the PUSCH transmitted in multiple slots sent by the terminal. The specific determination method will be described in the subsequent embodiments.

In an embodiment, the method for indicating transmission also includes: in the case where it is determined that the SBFD symbol(s) and the non-SBFD symbol(s) are available for receiving the PUSCH sent by the terminal in multiple slots, and that the symbols occupied by the PUSCH in multiple slots do not include any SBFD symbol, receiving the PUSCH sent by the terminal with a first frequency domain resource configured for the PUSCH in multiple slots.

In the case where the network device determines that the SBFD symbol(s) and the non-SBFD symbol(s) are available for transmitting the PUSCH in multiple slots, the network device may further determine whether the symbols occupied by the PUSCH in multiple slots include an SBFD symbol.

In the case where the symbols occupied by the PUSCH in multiple slots do not include any SBFD symbol, when the network device sends the PUSCH transmitted in multiple slots in multiple slots, the situation of sending the PUSCH in the SBFD symbol(s) does not occur, and thus the first resource FD#1 configured for the PUSCH in multiple slots will not conflict with the frequency domain resource other than the uplink resource. Therefore, the PUSCH sent by the terminal is capable of being received with FD#1 in multiple slots.

In an embodiment, the method for indicating transmission also includes: in the case where it is determined that the SBFD symbol(s) and the non-SBFD symbol(s) are available for receiving the PUSCH sent by the terminal in multiple slots, and that a first frequency domain resource configured for the PUSCH in a first slot of the multiple slots is within an uplink resource corresponding to the SBFD symbol(s), receiving the PUSCH sent by the terminal in the first slot.

In the case where the network device determines that the SBFD symbol(s) and the non-SBFD symbol(s) are available for receiving the PUSCH sent by the terminal in multiple slots, the network device may further determine whether the first frequency domain resource FD#1 configured for the PUSCH in the first slot of the multiple slots includes the frequency domain resource other than the uplink resource corresponding to the SBFD symbol(s).

In the case where FD#1 includes the frequency domain resource other than the uplink resource corresponding to the SBFD symbol(s), that is, FD#1 is not within the uplink resource corresponding to the SBFD symbol(s), when the network device receives the PUSCH transmitted in multiple slots sent by the terminal in the SBFD symbol(s) of the first slot, FD#1 will conflict with the frequency domain resource other than the uplink resource. Therefore, the PUSCH transmitted in multiple slots sent by the terminal may not be received in the first slot.

In the case where FD#1 does not include any frequency domain resource other than the uplink resource corresponding to the SBFD symbol(s), that is, FD#1 is within the uplink resource corresponding to the SBFD symbol(s), when the network device receives the PUSCH transmitted in multiple slots sent by the terminal in the SBFD symbol(s) of the slot, there will be no conflict between FD#1 and the frequency domain resource other than the uplink resource. Therefore, the PUSCH transmitted in multiple slots sent by the terminal may be received in the first slot.

In an embodiment, the method for indicating transmission also includes: in the case where it is determined that the SBFD symbol(s) and the non-SBFD symbol(s) are available for transmitting the PUSCH in multiple slots, that the symbol(s) occupied by the PUSCH in a first slot of the multiple slots includes at least one SBFD symbol, and that a first frequency domain resource configured for the PUSCH in the first slot includes a frequency domain resource other than the uplink resource corresponding to the SBFD symbol(s), not receiving the PUSCH sent by the terminal in the first slot.

In an embodiment, the method for indicating transmission further includes: the symbol(s) occupied by the PUSCH in the first slot of the multiple slots includes downlink symbol(s), and not receiving the PUSCH sent by the terminal in the first slot. This embodiment may be combined with any other embodiment in the disclosure.

For the case where the network device determines that the SBFD symbol(s) and the non-SBFD symbol(s) are available for receiving the PUSCH sent by the terminal in multiple slots, the case where the network device determines that only the SBFD symbol(s) is/are available for receiving the PUSCH sent by the terminal in multiple slots, or the case where the network device determines that only the non-SBFD symbol(s) is/are available for receiving the PUSCH sent by the terminal in multiple slots, the network device may always determine whether the symbol(s) occupied by the PUSCH in the first slot (such as a flexible slot configured with an uplink subband) of multiple slots used for sending the PUSCH includes a downlink symbol. In the case where it is determined that the symbol(s) occupied by the PUSCH in the first slot include a downlink symbol, FD#1 will conflict with the frequency domain resource other than the uplink resource. Therefore, the PUSCH sent by the terminal may not be received in the first slot.

In an embodiment, the method for indicating transmission also includes: in the case where it is determined that the SBFD symbol(s) and the non-SBFD symbol(s) are available for transmitting the PUSCH in multiple slots, that the symbols occupied by the PUSCH in multiple slots include at least one SBFD symbol, and that there is an overlapping second frequency domain resource between a first frequency domain resource configured for the PUSCH in the multiple slots and the uplink resource corresponding to the SBFD symbol(s), receiving the PUSCH sent by the terminal with the second frequency domain resource in the multiple slots.

In an embodiment, in the case where the network device determines that the SBFD symbol(s) and the non-SBFD symbol(s) are available for receiving the PUSCH sent by the terminal in multiple slots, the network device may further determine whether there is an overlapping second frequency domain resource FD#2 between the first frequency domain resource FD#1 configured for the PUSCH in multiple slots and the uplink resource corresponding to the SBFD symbol(s).

In the case where there is an overlapping second frequency domain resource FD#2 between FD#1 and the uplink resource corresponding to the SBFD symbol(s), the network device may receive, with the FD#2, the PUSCH transmitted in multiple slots sent by the terminal, in multiple slots for receiving the PUSCH.

Since FD#2 is within the uplink resource corresponding to the SBFD symbol(s), receiving, with the FD#2, the PUSCH transmitted in multiple slots sent by the terminal may ensure that the frequency domain resource for receiving the PUSCH in the SBFD symbol(s) in each slot will not conflict with the frequency domain resource other than the uplink resource.

In an embodiment, the network device may also determine whether the symbol(s) occupied by the first PUSCH of the PUSCH transmitted in multiple slots includes at least one SBFD symbol on the basis of determining whether there is an overlapping second frequency domain resource FD#2 between the first frequency domain resource FD#1 configured for the PUSCH in the first slot of the multiple slots and the uplink resource corresponding to the SBFD symbol(s).

In the case where there is an overlapping second frequency domain resource FD#2 between FD#1 and the uplink resource corresponding to the SBFD symbol(s), and where the symbol(s) occupied by the first PUSCH of the PUSCH transmitted in multiple slots contains at least one SBFD symbol, the network device may receive, with FD#2, the PUSCH transmitted in multiple slots sent by the terminal in the multiple slots used for receiving the PUSCH sent by the terminal.

In an embodiment, the network device may also determine whether the symbols occupied by all PUSCH of the PUSCH transmitted in multiple slots include at least one SBFD symbol on the basis of determining whether there is an overlapping second frequency domain resource FD#2 between the first frequency domain resource FD#1 configured for PUSCH in the first slot of the multiple slots and the uplink resource corresponding to the SBFD symbol(s).

In the case where there is an overlapping second frequency domain resource FD#2 between FD#1 and the uplink resource corresponding to the SBFD symbol(s), and where the symbols occupied by all PUSCH of the PUSCH transmitted in multiple slots include at least one SBFD symbol, the network device may receive, with FD#2, the PUSCH transmitted in multiple slots sent by the terminal in the multiple slots used for receiving the PUSCH sent by the terminal.

In an embodiment, the method for indicating transmission also includes: in the case where it is determined that the SBFD symbol(s) and the non-SBFD symbol(s) are available for receiving the PUSCH sent by the terminal in multiple slots, that the symbols occupied by the PUSCH in the multiple slots include at least one SBFD symbol, and that there is an overlapping second frequency domain resource between the first frequency domain resource configured for the PUSCH in multiple slots and the uplink resource corresponding to the SBFD symbol(s), receiving, with the second frequency domain resource, the PUSCH sent by the terminal in the SBFD symbol(s) in the first slot of the multiple slots and receiving, with the first frequency domain resource, the PUSCH sent by the terminal, in the non-SBFD symbol(s) in the first slot.

In an embodiment, in the case where the network device determines that the SBFD symbol(s) and the non-SBFD symbol(s) are available for receiving the PUSCH sent by the terminal in multiple slots, the network device may further determine whether there is an overlapping second frequency domain resource FD#2 between the first frequency domain resource FD#1 configured for the PUSCH in the first slot of the multiple slots and the uplink resource corresponding to the SBFD symbol(s).

In the case where there is an overlapping second frequency domain resource FD#2 between FD#1 and the uplink resource corresponding to the SBFD symbol(s), the network device may receive, with FD#2, the PUSCH transmitted in multiple slots sent by the terminal, in the SBFD symbol(s) in the first slot and may receive, with FD#1, the PUSCH transmitted in multiple slots sent by the terminal, in the non-SBFD symbol(s) in the first slot.

Since FD#2 is within the uplink resource corresponding to the SBFD symbol(s), receiving, with the FD#2, the PUSCH transmitted in multiple slots sent by the terminal in the SBFD symbol(s) may ensure that the frequency domain resource for sending the PUSCH to the terminal in the SBFD symbol(s) in each slot will not conflict with the frequency domain resource other than the uplink resource. Further, there is no frequency domain resource other than the uplink resource in the non-SBFD symbol(s). Therefore, receiving, with the FD#1, the PUSCH transmitted in multiple slots sent by the terminal in the non-SBFD symbol(s) will not conflict with the frequency domain resource other than the uplink resource, which contributes to ensuring that the frequency domain resources are fully utilized.

In an embodiment, the method for indicating transmission also includes: in the case where it is determined that the SBFD symbol(s) and the non-SBFD symbol(s) are available for receiving the PUSCH sent by the terminal in multiple slots, that the symbols occupied by the PUSCH in multiple slots include at least one SBFD symbol, and that the symbol(s) occupied by the PUSCH in the first slot of the multiple slots does not include nay SBFD symbol, receiving, in the first slot with a first frequency domain resource configured for the PUSCH, the PUSCH sent by the terminal, and/or in the case where the symbol(s) occupied by the PUSCH in the first slot of the multiple slots includes SBFD symbol(s), sending the PUSCH in the first slot with the overlapping second frequency domain resource between the first frequency domain resource configured for the PUSCH and the uplink resource corresponding to the SBFD symbol(s).

In an embodiment, in the case where the network device determines that the SBFD symbol(s) and the non-SBFD symbol(s) are available for receiving the PUSCH sent by the terminal in multiple slots, and that the symbols occupied by the PUSCH in multiple slots include at least one SBFD symbol, the network device may further determine whether the symbol(s) occupied by the PUSCH in the first slot of the multiple slots includes an SBFD symbol.

For example, in the case where it is determined that the symbol(s) occupied by the PUSCH in the first slot does not include any SBFD symbol, there will be no conflict between the first frequency domain resource configured for the PUSCH in the first slot and the frequency domain resource other than the uplink resource. Therefore, the network device may receive, with the first frequency domain resource configured for the PUSCH in the first slot, the PUSCH sent by the terminal.

For example, in the case where it is determined that the symbol(s) occupied by the PUSCH in the first slot includes the SBFD symbol(s), the network device may further determine the overlapping second frequency domain resource between the first frequency domain resource configured for the PUSCH and the uplink resource corresponding to the SBFD symbol in the first slot. Since the second frequency domain resource is within the uplink resource corresponding to the SBFD symbol(s), they will not conflict with the frequency domain resource other than the uplink resource. Therefore, the network device may receive, with the second frequency domain resource in the first slot, the PUSCH sent by the terminal.

In an embodiment, the method for indicating transmission also includes: in the case where it is determined that the SBFD symbol(s) and the non-SBFD symbol(s) are available for receiving the PUSCH sent by the terminal in multiple slots, that a third frequency domain resource for sending the PUSCH is configured in the SBFD symbol(s), and that a fourth frequency domain resource for sending the PUSCH is configured in the non-SBFD symbol(s), receiving, with the third frequency domain resource, the PUSCH sent by the terminal in the SBFD symbol(s) and receiving, with the fourth frequency domain resource, the PUSCH sent by the terminal in the non-SBFD symbol(s).

In an embodiment, in the case where the network device determines that the SBFD symbol(s) and the non-SBFD symbol(s) are available for receiving the PUSCH sent by the terminal in multiple slots, and where the symbols occupied by the PUSCH in multiple slots include at least one SBFD symbol, it may be further determined whether the network device has configured the third frequency domain resource for sending the PUSCH in the SBFD symbol(s) and has configured the fourth frequency domain resource for sending the PUSCH in the non-SBFD symbol(s) for the terminal. The third frequency domain resource does not include any frequency domain resource other than the uplink resource corresponding to the SBFD symbol(s).

In the case where the network device configures the third frequency domain resource for sending the PUSCH in the SBFD symbol(s) and configures the fourth frequency domain resource for sending the PUSCH in the non-SBFD symbol(s) for the terminal, since the third frequency domain resource does not include any frequency domain resource other than the uplink resource corresponding to the SBFD symbol(s), the third frequency domain resource will not conflict with the frequency domain resource other than the uplink resource. Therefore, the PUSCH transmitted in multiple slots sent by the terminal may be received with the third frequency domain resource in the SBFD symbol(s) occupied by the PUSCH in multiple slots used for sending the PUSCH.

Further, since there is no frequency domain resource other than the uplink resource in the non-SBFD symbol(s), the fourth frequency domain resource will not conflict with the frequency domain resource other than the uplink resource. Therefore, the PUSCH sent by the terminal may be received with the fourth frequency domain resource in the non-SBFD symbols occupied by the PUSCH in multiple slots used for transmitting the PUSCH.

In an embodiment, the method for indicating transmission also includes: in the case where it is determined that the SBFD symbol(s) and the non-SBFD symbol(s) are available for receiving the PUSCH sent by the terminal in multiple slots, and where the symbol(s) where the PUSCH is located in the first slot of the multiple slots includes non-SBFD symbol(s), if the uplink resource corresponding to the non-SBFD symbol(s) is greater than or equal to the first frequency domain resource configured for the PUSCH, determining a fifth frequency domain resource in the uplink resource and receiving, with the fifth frequency domain resource, the PUSCH sent by the terminal in the first slot, in which a bandwidth of the fifth frequency domain resource is equal to that of the first frequency domain resource; and/or if the uplink resource corresponding to the non-SBFD symbol(s) is less than the first frequency domain resource configured for the PUSCH, not receiving the PUSCH sent by the terminal in the first slot.

In an embodiment, in the case where the network device determines that the SBFD symbol(s) and the non-SBFD symbol(s) are available for receiving the PUSCH sent by the terminal in multiple slots, and where the symbol(s) where the PUSCH is located in the first slot of the multiple slots includes non-SBFD symbol(s), the relationship between the uplink resource corresponding to the non-SBFD symbol(s) and the first frequency domain resource configured for the PUSCH may be further determined.

In the case where the uplink resource corresponding to the non-SBFD symbol(s) is greater than or equal to the first frequency domain resource configured for the PUSCH, a frequency domain resource (for example, called the fifth frequency domain resource) with the same bandwidth as the first frequency domain resource may be determined in the uplink resource corresponding to the non-SBFD symbol(s), and then the PUSCH sent by the terminal may be received with the fifth frequency domain resource in the first slot. Since the fifth frequency domain resource has the same bandwidth as the first frequency domain resource, it is conducive to ensuring smooth reception of the PUSCH.

In an embodiment, the bandwidth of the first frequency domain resource may be determined first. The bandwidth may be represented by the number of RBs, for example, k1 RBs.

For example, a starting RB of the uplink resource corresponding to the first slot may be used as a starting point, k1 consecutive RBs may be determined from the starting point in the uplink resource, and then the determined k1 RBs may be used as the fifth frequency domain range.

For example, an ending RB of the uplink resource corresponding to the first slot may be used as an ending point, k1 consecutive RBs may be determined from the ending point in the uplink resource, and the determined k1 RBs may be used as the fifth frequency domain range.

For example, a frequency domain range with a duration of k2 consecutive RBs may be determined as a sixth frequency domain resource in an activated BWP, and overlapping k1 RBs between the sixth frequency domain resource and the uplink resource corresponding to the non-SBFD symbol(s) may be determined as the fifth frequency domain range.

In the case where the uplink resource corresponding to the non-SBFD symbol(s) is smaller than the first frequency domain resource configured for the PUSCH, the frequency domain resource having the bandwidth equal to that of the first frequency domain resource cannot be determined in the uplink resource corresponding to the non-SBFD symbol(s), and the network device does not receive the PUSCH sent by the terminal in the first slot.

In an embodiment, the method for indicating transmission also includes: in the case where it is determined that only the SBFD symbol(s) is/are available for transmitting the PUSCH in multiple slots, and where there is an overlapping second frequency domain resource between the first frequency domain resource configured for the PUSCH in the first slot of the multiple slots and the uplink resource corresponding to the SBFD symbol(s), if the symbol(s) occupied by the PUSCH in the first slot includes non-SBFD symbol(s), not receiving in the first slot the PUSCH sent by the terminal; and/or if the symbol(s) occupied by the PUSCH in the first slot includes SBFD symbol(s) and does not include any downlink symbol, sending the PUSCH with the second frequency domain resource in the first slot; and/or if the symbol(s) occupied by the PUSCH in the first slot only includes SBFD symbol(s), receiving with the second frequency domain resource the PUSCH sent by the terminal in the first slot.

In an embodiment, in the case where the network device determines that only the SBFD symbol(s) is/are available for receiving the PUSCH sent by the terminal in multiple slots, and where there is an overlapping second frequency domain resource between the first frequency domain resource configured for the PUSCH in the first slot of the multiple slots and the uplink resource corresponding to the SBFD symbol(s), the network device may further determine whether the symbol(s) occupied by the PUSCH in the first slot includes a non-SBFD symbol.

For example, in the case where the symbol(s) occupied by the PUSCH in the first slot includes non-SBFD symbol(s), receiving the PUSCH sent by the terminal in the first slot will cause that the symbols occupied by the PUSCH include the non-SBFD symbol(s), which does not meet the limitation that the only the SBFD symbol(s) is/are available for receiving the PUSCH sent by the terminal in multiple slots. Therefore, the network device may not receive the PUSCH transmitted in multiple slots sent by the terminal in the first slot.

For example, in the case where the symbol(s) occupied by the PUSCH in the first slot includes SBFD symbol(s) and does not include any downlink symbol, receiving the PUSCH sent by the terminal in the first slot will cause that the symbols occupied by the PUSCH include the SBFD symbol(s), which may meet the limitation that only the SBFD symbol(s) is/are available for receiving the PUSCH sent by the terminal in multiple slots. Therefore, the network device may receive with the second frequency domain resource in the first slot the PUSCH transmitted in multiple slots sent by the terminal.

For example, in the case where the symbol(s) occupied by the PUSCH in the first slot only include SBFD symbol(s), receiving the PUSCH in the first slot will cause that the symbols occupied by the PUSCH only include the SBFD symbol(s), which may meet the limitation that only the SBFD symbol(s) is/are available for receiving the PUSCH sent by the terminal in multiple slots. Therefore, the network device may receive, with the second frequency domain resources in the first slot, the PUSCH transmitted in multiple slots sent by the terminal.

In an embodiment, the method for indicating transmission also includes: in the case where it is determined that the non-SBFD symbol(s) is/are available for transmitting the PUSCH in multiple slots, if the symbol(s) occupied by the PUSCH in the first slot of the multiple slots includes SBFD symbols, not receiving in the first slot the PUSCH sent by the terminal; and/or if the symbol(s) occupied by the PUSCH in the first slot includes uplink symbol(s) and/or flexible symbol(s) and does not include any downlink symbol, receiving the PUSCH in the first slot; and/or if the symbol(s) occupied by the PUSCH in the first slot only includes uplink symbol(s) and/or flexible symbol(s), sending the PUSCH in the first slot.

In an embodiment, the network device may determine that the non-SBFD symbol(s) is/are available for receiving the PUSCH sent by the terminal in multiple slots, and the network device may further determine the symbols occupied by the PUSCH in the first slot.

For example, in the case where the symbol(s) occupied by the PUSCH in the first slot includes SBFD symbol(s), receiving the PUSCH sent by the terminal in the first slot will cause that the symbols occupied by the PUSCH include the SBFD symbol(s), which does not comply with the limitation that only the non-SBFD symbol(s) is/are available for receiving the PUSCH sent by the terminal in multiple slots. Therefore, the network device may not receive the PUSCH transmitted in multiple slots sent by the terminal in the first slot.

For example, in the case where the symbol(s) occupied by the PUSCH in the first slot includes uplink symbol(s) and/or flexible symbol(s), receiving the PUSCH sent by the terminal in the first slot will cause that the symbols occupied by the PUSCH include the uplink symbol(s) and/or flexible symbol(s) and does not include any downlink symbol, since the non-SBFD symbol(s) includes downlink symbol(s), flexible symbol(s) and uplink symbol(s), which may meet the limitation that only the non-SBFD symbol(s) is/are available for transmitting the PUSCH in multiple slots. Therefore, the network device may receive the PUSCH transmitted in multiple slots sent by the terminal in the first slot.

For example, in the case where the symbol(s) occupied by the PUSCH in the first slot only includes uplink symbol(s) and/or flexible symbol(s), receiving the PUSCH sent by the terminal in the first slot will cause that the symbols occupied by the PUSCH also include only the uplink symbol(s) and/or the flexible symbol(s), which meets the limitation that only the non-SBFD symbol(s) is/are available for receiving the PUSCH sent by the terminal in multiple slots. Therefore, the network device may receive the PUSCH transmitted in multiple slots sent by the terminal in the first slot.

Embodiments of the disclosure further provides a method for determining a resource performed by a communication system. The communication system includes a terminal and a network device.

The terminal is configured to determine, based on first information sent by a network device, symbol(s) available for transmitting the PUSCH in multiple slots. The symbol includes at least one of: an SBFD symbol or a non-SBFD symbol.

The network device is configured to send first information to the terminal. The first information indicate symbol(s) in which the terminal is able to sent PUSCH transmitted in multiple slots. The symbol includes at least one of: an SBFD symbol or a non-SBFD symbol.

It should be noted that for other contents involved in this embodiment, reference may be made the description of the relevant contents in previous embodiments, which will not be repeated here.

Corresponding to the afore-mentioned embodiments of the methods for determining transmission and the methods for indicating transmission, the disclosure also provides embodiments of apparatus for determining transmission and apparatus for indicating transmission.

FIG. 15 is a schematic block diagram illustrating an apparatus for determining transmission according to an embodiment of the disclosure. The apparatus may be configured in a terminal. As illustrated in FIG. 15, the method for determining transmission includes a processing module 1501.

The processing module 1501 is configured to determine symbol(s) available for transmitting the PUSCH in multiple slots based on first information sent by a network device. The symbol(s) includes at least one of: subband full-duplex SBFD symbol(s) or non-SBFD symbol(s).

In an embodiment, the first information includes at least one of: frequency domain resource information or an indication field.

In an embodiment, the processing module is configured to perform at least one of the following:
in the case where a frequency domain resource configured for the PUSCH by the frequency domain resource information sent by the network device is within an uplink resource corresponding to the SBFD symbol(s), determining that the SBFD symbol(s) and the non-SBFD symbol(s) are available for transmitting the PUSCH in multiple slots; or
in the case where a frequency domain resource configured for the PUSCH by the frequency domain resource information sent by the network device includes a frequency domain resource other than an uplink resource corresponding to the SBFD symbol(s), determining that only the SBFD symbol(s) or only the non-SBFD symbol(s) is/are available for transmitting the PUSCH in multiple slots.

In an embodiment, the processing module is configured to determine that the SBFD symbol(s) and the non-SBFD symbol(s) are available for transmitting the PUSCH in multiple slots in the case where a frequency domain resource for sending the PUSCH in the SBFD symbol(s) is configured and a frequency domain resource for sending the PUSCH in the non-SBFD symbol(s) is configured.

In an embodiment, the indication field occupies 1 bit or 2 bits.

In an embodiment, the processing module is configured to perform at least one of the following:
in the case where the indication field indicates that the SBFD symbol(s) and the non-SBFD symbol(s) are available for transmitting the PUSCH in multiple slots, determining that t the SBFD symbol(s) and the non-SBFD symbol(s) are available for transmitting the PUSCH in multiple slots; or
in the case where the indication field indicates that only the SBFD symbol(s) or only the non-SBFD symbol(s) is/are available for transmitting the PUSCH in multiple slots, determining that only the SBFD symbol(s) or only the non-SBFD symbol(s) is/are available for transmitting the PUSCH in multiple slots.

In an embodiment, the processing module is configured to perform at least one of the following:
in the case where the indication field indicates that only the SBFD symbol(s) is/are available for transmitting the PUSCH in multiple slots, determining that only the SBFD symbol(s) is/are available for transmitting the PUSCH in multiple slots;
in the case where the indication field indicates that only the non-SBFD symbol(s) is/are available for transmitting the PUSCH in multiple slots, determining that only the non-SBFD symbol(s) is/are available for transmitting the PUSCH in multiple slots; or
in the case where the indication field is empty, determining that the SBFD symbol(s) and the non-SBFD symbol(s) re available for transmitting the PUSCH in multiple slots.

In an embodiment, the processing module is configured to perform at least one of the following:
in the case where the indication field indicates that the SBFD symbol(s) and the non-SBFD symbol(s) are available for transmitting the PUSCH in multiple slots, determining that the SBFD symbol(s) and the non-SBFD symbol(s) are available for transmitting the PUSCH in multiple slots;
in the case where the indication field indicates that only the SBFD symbol(s) is/are available for transmitting the PUSCH in multiple slots, determining that only the SBFD symbol(s) is/are available for transmitting the PUSCH in multiple slots; or
in the case where the indication field indicates that only the non-SBFD symbol(s) is/are available for transmitting the PUSCH in multiple slots, determining that only the non-SBFD symbol(s) is/are available for transmitting the PUSCH in multiple slots.

In an embodiment, the apparatus also includes: a sending module configured to send the PUSCH in a first slot in the case where it is determined that the SBFD symbol(s) and the non-SBFD symbol(s) is/are available for transmitting the PUSCH in multiple slots and where a first frequency domain resource configured for the PUSCH in the first slot of the multiple slots is within a uplink resource corresponding to the SBFD symbol(s).

In an embodiment, the apparatus also includes: a sending module configured to not send the PUSCH in the first slot in the case where it is determined that the SBFD symbol(s) and the non-SBFD symbol(s) are available for transmitting the PUSCH in multiple slots, where the symbol(s) occupied by the PUSCH in the first slot of the multiple slots includes at least one SBFD symbol, and where a first frequency domain resource configured for the PUSCH in the first slot includes a frequency domain resource other than the uplink resource corresponding to the SBFD symbol(s).

In an embodiment, the apparatus also includes: a sending module configured to send the PUSCH with a second frequency domain resource in multiple slots in the case where it is determined that the SBFD symbol(s) and the non-SBFD symbol(s) are available for transmitting the PUSCH in multiple slots, where symbols occupied by the PUSCH in multiple slots include at least one SBFD symbol, and where there is an overlapping second frequency domain resource between the first frequency domain resource configured for the PUSCH in the multiple slots and the uplink resource corresponding to the SBFD symbol(s).

In an embodiment, the apparatus also includes: a sending module configured to send the PUSCH with the second frequency domain resource in the SBFD symbol(s) in the first slot of the multiple slots and send the PUSCH with the first frequency domain resource in the non-SBFD symbol(s) in the first slot in the case where it is determined that the SBFD symbol(s) and the non-SBFD symbol(s) are available for transmitting the PUSCH in multiple slots, where the symbols occupied by the PUSCH in the multiple slots include at least one SBFD symbol, and where there is an overlapping second frequency domain resource between the first frequency domain resource configured for the PUSCH in the multiple slots and the uplink resource corresponding to the SBFD symbol(s).

In an embodiment, the apparatus also includes: a sending module configured to send the PUSCH with the first frequency domain resource configured for the PUSCH in the first slot in the case where it is determined that the SBFD symbol(s) and the non-SBFD symbol(s) are available for transmitting the PUSCH in multiple slots, where the symbols occupied by the PUSCH in multiple slots include at least one SBFD symbol, and where the symbol(s) occupied by the PUSCH in the first slot of the multiple slots does not include any SBFD symbol, and/or send the PUSCH with the overlapping second frequency domain resource between the first frequency domain resource configured for the PUSCH and the uplink resource corresponding to the SBFD symbol(s) in the first slot in the case where the symbol(s) occupied by the PUSCH in the first slot of the multiple slots includes the SBFD symbol(s),.

In an embodiment, the apparatus also includes: a sending module configured to send the PUSCH with a third frequency domain resource in the SBFD symbol(s) and with a fourth frequency domain resource in the non-SBFD symbol(s) in the case where it is determined that the SBFD symbol(s) and the non-SBFD symbol(s) are available for transmitting the PUSCH in multiple slots, and where the third frequency domain resource for sending the PUSCH in the SBFD symbol(s) is configured and the fourth frequency domain resource for sending the PUSCH in the non-SBFD symbol(s) is configured.

In an embodiment, the apparatus also includes: a sending module configured to determine a fifth frequency domain resource in an uplink resource and send the PUSCH with the fifth frequency domain resource in the first slot in the case where it is determined that the SBFD symbol(s) and the non-SBFD symbol(s) are available for receiving the PUSCH sent by the terminal in multiple slots, where the symbol(s) where the PUSCH is located in the first slot of the multiple slots includes non-SBFD symbol(s), and where the uplink resource corresponding to the non-SBFD symbol(s) is greater than or equal to the first frequency domain resource configured for the PUSCH, in which a bandwidth of the fifth frequency domain resource is equal to that of the first frequency domain resource; and/or not sent the PUSCH in the first slot in the case where the uplink resource corresponding to the non-SBFD symbol(s) is less than the first frequency domain resource configured for the PUSCH.

In an embodiment, the apparatus also includes: a sending module configured to, in the case where it is determined that only the SBFD symbol(s) is/are available for transmitting the PUSCH in multiple slots, where there is an overlapping second frequency domain resource between the first frequency domain resource configured for the PUSCH in the first slot of the multiple slots and the uplink resource corresponding to the SBFD symbol(s), and where the symbol(s) occupied by PUSCH in the first slot includes non-SBFD symbol(s), not send the PUSCH in the first slot; and/or in the case where the symbol(s) occupied by the PUSCH in the first slot includes SBFD symbol(s) and does not include any downlink symbol, send the PUSCH with the second frequency domain resource in the first slot; and/or in the case where the symbol(s) occupied by the PUSCH in the first slot include only SBFD symbol(s), send the PUSCH with the second frequency domain resource in the first slot.

In an embodiment, the apparatus also includes: a sending module configured to, in the case where it is determined that the non-SBFD symbol(s) is/are available for transmitting the PUSCH in multiple slots and where the symbol(s) occupied by the PUSCH in the first slot of the multiple slots includes SBFD symbol(s), not send the PUSCH in the first slot; and/or in the case where the symbol(s) occupied by the PUSCH in the first slot only includes uplink symbol(s) and/or flexible symbol(s) and does not include any downlink symbol, send the PUSCH in the first slot; and/or in the case where the symbol(s) occupied by the PUSCH in the first slot only includes uplink symbol(s) and/or flexible symbol(s), send the PUSCH in the first slot.

In an embodiment, the apparatus further includes: a sending module configured to not send the PUSCH in a first slot of the multiple slots in the case where the symbols occupied by the PUSCH include a downlink symbol.

FIG. 16 is a schematic block diagram illustrating an apparatus for indicating transmission according to an embodiment of the disclosure. The apparatus may be configured in a network device. As illustrated in FIG. 16, the apparatus for indicating transmission includes a sending module 1601.

The sending module 1601 is configured to send first information to the terminal. The first information indicates symbols(s) available for transmitting the PUSCH by the terminal in multiple slots. The symbol(s) includes at least one of: SBFD symbol(s) or non-SBFD symbol(s).

In an embodiment, the first information includes at least one of: frequency domain resource information or an indication field.

In an embodiment, in the case where it is determined that symbol(s) available for receiving the PUSCH sent by the terminal in multiple slots includes the SBFD symbol(s) and the non-SBFD symbol(s), the frequency domain resource information configures that a frequency domain resource for the PUSCH is within an uplink resource corresponding to the SBFD symbol(s); and/or in the case where it is determined that symbol(s) available for receiving the PUSCH sent by the terminal in multiple slots includes the SBFD symbol(s) or the non-SBFD symbol(s), the frequency domain resource information configures that a frequency domain resource for the PUSCH includes a frequency domain resource other than the uplink resource corresponding to the SBFD symbol(s).

In an embodiment, in the case where it is determined that symbol(s) available for receiving the PUSCH sent by the terminal in multiple slots includes the SBFD symbol(s) and the non-SBFD symbol(s), the frequency domain resource information configures that the frequency domain resource for the PUSCH includes a frequency domain resource for sending the PUSCH in the SBFD symbol(s) and a frequency domain resource for sending the PUSCH in the non-SBFD symbol(s).

In an embodiment, the indication field occupies 1 bit or 2 bits.

In an embodiment, in the case where it is determined that symbol(s) available for receiving the PUSCH sent by the terminal in multiple slots includes the SBFD symbol(s) and the non-SBFD symbol(s), the indication field indicates that the terminal is able to send the PUSCH transmitted in multiple slots in the SBFD symbol(s) and in the non-SBFD symbol(s); and/or in the case where it is determined that symbol(s) available for receiving the PUSCH sent by the terminal in multiple slots includes the SBFD symbol(s) or the non-SBFD symbol(s), the indication field indicates that the terminal is able to send the PUSCH transmitted in multiple slots only in the SBFD symbol(s) or only in the non-SBFD symbol(s).

In an embodiment, in the case where it is determined that symbol(s) available for receiving the PUSCH sent by the terminal in multiple slots only includes the SBFD symbol(s), the indication field indicates that the terminal is able to send the PUSCH transmitted in multiple slots only in the SBFD symbol(s); and/or in the case where it is determined that symbol(s) available for receiving the PUSCH sent by the terminal in multiple slots only includes the non-SBFD symbol(s), the indication field indicates that the terminal is able to send the PUSCH transmitted in multiple slots only in the non-SBFD symbol(s); and/or in the case where it is determined that symbol(s) available for receiving the PUSCH sent by the terminal in multiple slots includes both the SBFD symbol(s) and the non-SBFD symbol(s), the indication field is empty.

In an embodiment, in the case where it is determined that symbol(s) available for receiving the PUSCH sent by the terminal in multiple slots includes the SBFD symbol(s) and the non-SBFD symbol(s), the indication field indicates that the terminal is able to send the PUSCH transmitted in multiple slots in the SBFD symbol(s) and in the non-SBFD symbol(s); and/or in the case where it is determined that symbol(s) available for receiving the PUSCH sent by the terminal in multiple slots only includes the SBFD symbol(s), the indication field indicates that the terminal is able to send the PUSCH transmitted in multiple slots only in the SBFD symbol(s); and/or in the case where it is determined that symbol(s) available for receiving the PUSCH sent by the terminal in multiple slots only includes the non-SBFD symbol(s), the indication field indicates that the terminal is able to send the PUSCH transmitted in multiple slots only in the non-SBFD symbol(s).

In an embodiment, the apparatus also includes: a receiving module configured to receive the PUSCH sent by the terminal in the first slot in the case where it is determined that t the SBFD symbol(s) and in the non-SBFD symbol(s) are available for receiving the PUSCH sent by the terminal in multiple slots, and where a first frequency domain resource configured for the PUSCH in the first slot of the multiple slots is within the uplink resource corresponding to the SBFD symbol(s).

In an embodiment, the apparatus also includes: a receiving module configured to not receive the PUSCH sent by the terminal in the first slot in the case where it is determined that the SBFD symbol(s) and the non-SBFD symbol(s) are available for receiving the PUSCH sent by the terminal in multiple slots, where the symbol(s) occupied by the PUSCH in the first slot of the multiple slots includes at least one SBFD symbol, and where the first frequency domain resource configured for the PUSCH in the first slot includes a frequency domain resource other than the uplink resource corresponding to the SBFD symbol(s).

In an embodiment, the apparatus also includes: a receiving module configured to, in the case where it is determined that the SBFD symbol(s) and the non-SBFD symbol(s) are available for receiving the PUSCH sent by the terminal in multiple slots, where the symbols occupied by the PUSCH in multiple slots include at least one SBFD symbol, and where there is an overlapping second frequency domain resource between the first frequency domain resource configured for the PUSCH in the multiple slots and the uplink resource corresponding to the SBFD symbol(s), receive the PUSCH sent by the terminal with the second frequency domain resource in multiple slots.

In an embodiment, the apparatus also includes: a receiving module configured to, in the case where it is determined that the SBFD symbol(s) and the non-SBFD symbol(s) are available for receiving the PUSCH sent by the terminal in multiple slots, where the symbols occupied by the PUSCH in multiple slots include at least one SBFD symbol, and where there is an overlapping second frequency domain resource between the first frequency domain resource configured for the PUSCH in the multiple slots and the uplink resource corresponding to the SBFD symbol(s), receive the PUSCH sent by the terminal with the second frequency domain resource in the SBFD symbol(s) in the first slot of the multiple slots and receive the PUSCH sent by the terminal with the first frequency domain resource in the non-SBFD symbol(s) in the first slot.

In an embodiment, the apparatus also includes: a receiving module configured to receive the PUSCH sent by the terminal in the first slot with the first frequency domain resource configured for the PUSCH in the case where it is determined that the SBFD symbol(s) and the non-SBFD symbol(s) are available for receiving the PUSCH sent by the terminal in multiple slots, where the symbols occupied by the PUSCH in multiple slots include at least one SBFD symbol, and where the symbol(s) occupied by the PUSCH in the first slot of the multiple slots does not include any SBFD symbol, and/or receive the PUSCH sent by the terminal in the first slot with the overlapping second frequency domain resource between the first frequency domain resource configured for the PUSCH and the uplink resource corresponding to the SBFD symbol(s) in the case where the symbol(s) occupied by the PUSCH in the first slot of the multiple slots includes SBFD symbol(s).

In an embodiment, the apparatus also includes: a receiving module configured to receive the PUSCH sent by the terminal with the third frequency domain resource in the SBFD symbol(s) and with the fourth frequency domain resource in the non-SBFD symbol(s) in the case where it is determined that the SBFD symbol(s) and the non-SBFD symbol(s) are available for receiving the PUSCH sent by the terminal in multiple slots, where the third frequency domain resource for sending the PUSCH in the SBFD symbol(s) is configured and the fourth frequency domain resource for sending the PUSCH in the non-SBFD symbol(s) is configured.

In an embodiment, the apparatus also includes: a receiving module configured to, in the case where it is determined that the SBFD symbol(s) and the non-SBFD symbol(s) are available for receiving the PUSCH sent by the terminal in multiple slots, where the symbol(s) where the PUSCH is located in the first slot of the multiple slots includes non-SBFD symbol(s), and where the uplink resource corresponding to the non-SBFD symbol(s) is greater than or equal to the first frequency domain resource configured for the PUSCH, determine a fifth frequency domain resource in the uplink resource, and receive the PUSCH sent by the terminal with the fifth frequency domain resource in the first slot, in which the bandwidth of the fifth frequency domain resource is equal to that of the first frequency domain resource; and/or not receive the PUSCH sent by the terminal in the first slot in the case where the uplink resource corresponding to the non-SBFD symbol(s) is less than the first frequency domain resource configured for the PUSCH.

In an embodiment, the apparatus also includes: a receiving module configured to, in the case where it is determined that only the SBFD symbol(s) is/are available for transmitting the PUSCH in multiple slots, where there is an overlapping second frequency domain resource between the first frequency domain resource configured for PUSCH in the first slot of the multiple slots and the uplink resource corresponding to the SBFD symbol(s), and where the symbol(s) occupied by the PUSCH in the first slot includes non-SBFD symbol(s), not receive the PUSCH sent by the terminal in the first slot; and/or in the case where the symbol(s) occupied by the PUSCH in the first slot includes SBFD symbol(s) and does not include any downlink symbol, receive the PUSCH sent by the terminal with the second frequency domain resources in the first slot; and/or in the case where the symbol(s) occupied by the PUSCH in the first slot only includes the SBFD symbol(s), receive the PUSCH sent by the terminal with the second frequency domain resources in the first slot.

In an embodiment, the apparatus also includes: a receiving module configured to, in the case where it is determined that only the non-SBFD symbol(s) is/are available for receiving the PUSCH sent by the terminal in multiple slots, and where the symbol(s) occupied by the PUSCH in the first slot of the multiple slots includes SBFD symbol(s), not receive the PUSCH sent by the terminal in the first slot; and/or in the case where the symbol(s) occupied by the PUSCH in the first slot includes uplink symbol(s) and/or flexible symbol(s) and does not include any downlink symbol, receive the PUSCH sent by the terminal in the first slot; and/or in the case where the symbol(s) occupied by the PUSCH in the first slot only includes uplink symbol(s) and/or flexible symbol(s), receive the PUSCH sent by the terminal in the first slot.

In an embodiment, the apparatus further includes: a receiving module configured to not receive the PUSCH sent by the terminal in the first slot in the case where the symbols occupied by the PUSCH include a downlink symbol in the first slot of the multiple slots.

For the apparatus embodiments, since they basically correspond to the method embodiments, reference may be made to the partial description of the method embodiments. The apparatus embodiments described above are only schematic, in which the modules described as separate components may or may not be physically separated, and the components displayed as modules may or may not be physical modules. That is, they may be located in one place, or they may be distributed on multiple network modules. Some or all of the modules may be selected according to actual needs to achieve the purpose of the scheme of the embodiments. Those skilled in the art may understand and implement the embodiments without paying creative work.

Embodiments of the disclosure further provide a communication system, including a terminal and a network device. The terminal is configured to implement the method for determining transmission described in any of the above embodiments, and the network device is configured to implement the method for indicating transmission described in any of the above embodiments.

Embodiments of the disclosure further provide a communication device, including a processor and a memory for storing a computer program. When the computer program is executed by the processor, the method for determining transmission described in any of the above embodiments is implemented.

Embodiments of the disclosure further provide a communication device, including a processor and a memory for storing a computer program. When the computer program is executed by the processor, the method for indicating transmission described in any of the above embodiments is implemented.

Embodiments of the disclosure further provides a computer-readable storage medium for storing a computer program. When the computer program is executed by a processor, the method for determining transmission described in any of the above embodiments is implemented.

Embodiments of the disclosure further provides a computer-readable storage medium for storing a computer program. When the computer program is executed by a processor, the method for indicating transmission described in any of the above embodiments is implemented.

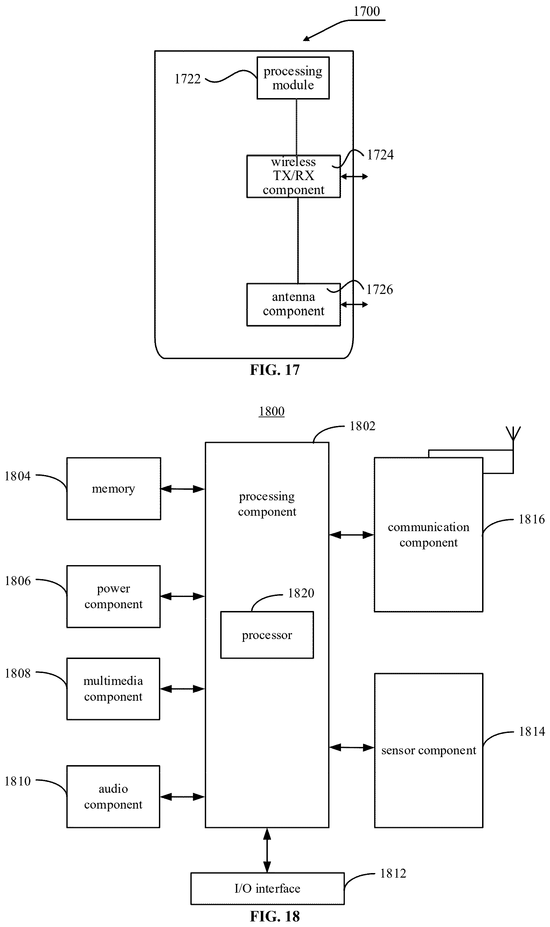

As illustrated in FIG. 17, FIG. 17 is a schematic block diagram illustrating a device 1700 for indicating transmission according to an embodiment of the disclosure. The device 1700 may be a base station. As illustrated in FIG. 17, the device 1700 includes a processing component 1722, a wireless transmission/reception component 1724, an antenna component 1726, and a signal processing part specific to a wireless interface. The processing component 1722 may further include one or more processors. One of the processors in the processing component 1722 may be configured to implement the method for indicating transmission described in any of the above embodiments.

FIG. 18 is a schematic block diagram illustrating a device 1800 for determining transmission according to an embodiment of the disclosure. For example, the device 1800 may be a terminal, such as a mobile phone, a computer, a digital broadcast terminal, a messaging device, a game console, a tablet device, a medical device, a fitness device, a personal digital assistant, etc.

As illustrated in FIG. 18, the device 1800 may include one or more of: a processing component 1802, a memory 1804, a power component 1806, a multimedia component 1808, an audio component 1810, an input/output (I/O) interface 1812, a sensor component 1814, or a communication component 1816.

The processing component 1802 generally controls the overall operation of the device 1800, such as operations associated with display, phone calls, data communications, camera operations, and recording operations. The processing component 1802 may include one or more processors 1820 to execute instructions to implement all or part of the steps of the method for determining transmission described in any of the above embodiments. In addition, the processing component 1802 may include one or more modules to facilitate the interaction between the processing component 1802 and other components. For example, the processing component 1802 may include a multimedia module to facilitate the interaction between the multimedia component 1808 and the processing component 1802.

The memory 1804 is configured to store various types of data to support the operations on the device 1800. Examples of such data include instructions for any application or method operating on the device 1800, contact data, phonebook data, messages, pictures, videos, etc.

The power component 1806 provides power to the various components of the device 1800. The power component 1806 may include a power management system, one or more power supplies, and other components associated with generating, managing, and distributing power to the device 1800.

The multimedia component 1808 includes a screen that provides an output interface between the device 1800 and the user. In some embodiments, the screen may include a liquid crystal display (LCD) and a touch panel (TP). If the screen includes a touch panel, the screen may be implemented as a touch screen to receive input signals from the user.

The audio component 1810 is configured to output and/or input audio signals. For example, the audio component 1810 includes a microphone (MIC), and when the device 1800 is in an operating mode, such as a call mode, a recording mode, and a speech recognition mode, the microphone is configured to receive an external audio signal. The received audio signal may be further stored in the memory 1804 or sent via the communication component 1816. In some embodiments, the audio component 1810 also includes a speaker for outputting audio signals.

The I/O interface 1812 provides an interface between the processing component 1802 and peripheral interface modules, such as keyboards, click wheels, buttons, etc. These buttons may include, but are not limited to, a home button, a volume button, a start button, and a lock button.

The sensor component 1814 includes one or more sensors for providing status assessment of various aspects for the device 1800.

The communication component 1816 is configured to facilitate wired or wireless communication between the device 1800 and other devices. The device 1800 may access a wireless network based on a communication standard, such as WiFi, 2G, 3G, 4G LTE, 5G NR, or a combination thereof. In an example embodiment, the communication component 1816 receives a broadcast signal or broadcast-related information from an external broadcast management system via a broadcast channel. In an example embodiment, the communication component 1816 also includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology, and other technologies.

In an example embodiment, the device 1800 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components to execute the method for determining transmission described in any of the above embodiments.

In an example embodiment, a non-transitory computer-readable storage medium including instructions is also provided, such as a memory 1804 including instructions, and the instructions may be executed by the processor 1820 of the device 1800 to complete the method for determining transmission described in any of the above embodiments. For example, the non-transitory computer-readable storage medium may be a ROM, a random access memory (RAM), a CD-ROM, a magnetic tape, a floppy disk, an optical data storage device, etc.

Those skilled in the art will readily appreciate other embodiments of the disclosure after considering the specification and practicing the disclosure herein. The disclosure is intended to cover any variations, uses, or adaptations of the disclosure that follow the general principles of the disclosure and include common knowledge or customary techniques in the art that are not disclosed in the disclosure. The description and examples are to be considered illustrative only, and the true scope and spirit of the disclosure are indicated by the following claims.

It should be understood that the disclosure is not limited to the exact structures that have been described above and shown in the drawings, and that various modifications and changes may be made without departing from the scope thereof. The scope of the disclosure is limited only by the appended claims.

## Claims

1. A method for indicating transmission, performed by a terminal, the method comprising:
determining a symbol available for transmitting a physical uplink shared channel (PUSCH) in a plurality of slots based on first information sent by a network device, wherein the symbol comprises at least one of: a subband full-duplex (SBFD) symbol or a non-SBFD symbol.

2. The method of claim 1, wherein the first information comprises at least one of:
frequency domain resource information; or
an indication field.

3. The method of claim 2, wherein determining the symbol available for transmitting the PUSCH in the plurality of slots based on the first information sent by the network device comprises at least one of:
in a case where a frequency domain resource configured for the PUSCH by the frequency domain resource information sent by the network device is within an uplink resource corresponding to the SBFD symbol, determining that the SBFD symbol and the non-SBFD symbol are available for transmitting the PUSCH in the plurality of slots; or
in a case where a frequency domain resource configured for the PUSCH by the frequency domain resource information sent by the network device comprises a frequency domain resource other than an uplink resource corresponding to the SBFD symbol, determining that only the SBFD symbol or the non-SBFD symbol is available for transmitting the PUSCH in the plurality of slots.

4. The method of claim 2, wherein determining the symbol available for transmitting the PUSCH in the plurality of slots based on the first information sent by the network device comprises:
in a case where a frequency domain resource for sending the PUSCH in the SBFD symbol is configured and a frequency domain resource for sending the PUSCH in the non-SBFD symbol is configured, determining the SBFD symbol and the non-SBFD symbol are available for transmitting the PUSCH in the plurality of slots.

5. The method of claim 2, wherein the indication field occupies 1 bit or 2 bits.

6. The method of claim 5, wherein determining the symbol available for transmitting the PUSCH in the plurality of slots based on the first information sent by the network device comprises at least one of:
in a case where the indication field indicates that the SBFD symbol and the non-SBFD symbol are available for transmitting the PUSCH in the plurality of slots, determining the SBFD symbol and the non-SBFD symbol are available for transmitting the PUSCH in the plurality of slots; or
in a case where the indication field indicates that only the SBFD symbol or the non-SBFD symbol is available for transmitting the PUSCH in the plurality of slots, determining that only the SBFD symbol or the non-SBFD symbol is available for transmitting the PUSCH in the plurality of slots.

7. The method of claim 5, wherein determining the symbol available for transmitting the PUSCH in the plurality of slots based on the first information sent by the network device comprises at least one of:
in a case where the indication field indicates that only the SBFD symbol is available for transmitting the PUSCH in the plurality of slots, determining that only the SBFD symbol is available for transmitting the PUSCH in the plurality of slots;
in a case where the indication field indicates that only the non-SBFD symbol is available for transmitting the PUSCH in the plurality of slots, determining that only the non-SBFD symbol is available for transmitting the PUSCH in the plurality of slots; or
in a case where it is determined that the indication field is empty, determining that the SBFD symbol and the non-SBFD symbol are available for transmitting the PUSCH in the plurality of slots.

8. The method of claim 5, wherein determining the symbol available for transmitting the PUSCH in the plurality of slots based on the first information sent by the network device comprises at least one of:
in a case where the indication field indicates that the SBFD symbol and the non-SBFD symbol are available for transmitting the PUSCH in the plurality of slots, determining the SBFD symbol and the non-SBFD symbol are available for transmitting the PUSCH in the plurality of slots;
in a case where the indication field indicates that only the SBFD symbol is available for transmitting the PUSCH in the plurality of slots, determining that only the SBFD symbol is available for transmitting the PUSCH in the plurality of slots; or
in a case where the indication field indicates that only the non-SBFD symbol is available for transmitting the PUSCH in the plurality of slots, determining that only the non-SBFD symbol is available for transmitting the PUSCH in the plurality of slots.

9. The method of any one of claims 1 to 8, further comprising:
in a case where it is determined that the SBFD symbol and the non-SBFD symbol are available for transmitting the PUSCH in the plurality of slots, and where a first frequency domain resource configured for the PUSCH in a first slot of the plurality of slots is within an uplink resource corresponding to the SBFD symbol, sending the PUSCH in the first slot.

10. The method of any one of claims 1 to 8, further comprising:
in a case where it is determined that the SBFD symbol and the non-SBFD symbol are available for transmitting the PUSCH in the plurality of slots, where symbols occupied by the PUSCH in a first slot of the plurality of slots comprise at least one SBFD symbol, and where a first frequency domain resource configured for the PUSCH in the first slot comprises a frequency domain resource other than an uplink resource corresponding to the SBFD symbol, not sending the PUSCH in the first slot.

11. The method of any one of claims 1 to 8, further comprising:
in a case where it is determined that the SBFD symbol and the non-SBFD symbol are available for transmitting the PUSCH in the plurality of slots, where symbols occupied by the PUSCH in the plurality of slots comprise at least one SBFD symbol, and where there is an overlapping second frequency domain resource between a first frequency domain resource configured for the PUSCH in the plurality of slots and an uplink resource corresponding to the SBFD symbol, sending the PUSCH with the overlapping second frequency domain resource in the plurality of slots.

12. The method of any one of claims 1 to 8, further comprising:
in a case where it is determined that the SBFD symbol and the non-SBFD symbol are available for transmitting the PUSCH in the plurality of slots, where symbols occupied by the PUSCH in the plurality of slots comprise at least one SBFD symbol, and where there is an overlapping second frequency domain resource between a first frequency domain resource configured for the PUSCH in the plurality of slots and an uplink resource corresponding to the SBFD symbol, sending the PUSCH with the overlapping second frequency domain resource in the SBFD symbol in a first slot of the plurality of slots, and sending the PUSCH with the first frequency domain resource in the non-SBFD symbol in the first slot.

13. The method of any one of claims 1 to 8, further comprising:
in a case where it is determined that the SBFD symbol and the non-SBFD symbol are available for transmitting the PUSCH in the plurality of slots, and where symbols occupied by the PUSCH in the plurality of slots comprise at least one SBFD symbol,
in a case where symbols occupied by the PUSCH in a first slot of the plurality of slots do not comprise any SBFD symbol, sending the PUSCH with a first frequency domain resource configured for the PUSCH in the first slot, and/or in a case where symbols occupied by the PUSCH in a first slot of the plurality of slots comprise an SBFD symbol, sending the PUSCH with an overlapping second frequency domain resource between a first frequency domain resource configured for the PUSCH and an uplink resource corresponding to the SBFD symbol in a first slot.

14. The method of any one of claims 1 to 8, further comprising:
in a case where it is determined that the SBFD symbol and the non-SBFD symbol are available for transmitting the PUSCH in the plurality of slots, and where a third frequency domain resource for sending the PUSCH in the SBFD symbol is configured and a fourth frequency domain resource for sending the PUSCH in the non-SBFD symbol is configured, sending the PUSCH with the third frequency domain resource in the SBFD symbol and sending the PUSCH with the fourth frequency domain resource in the non-SBFD symbol.

15. The method of any one of claims 1 to 8, further comprising:
in a case where it is determined that the SBFD symbol and the non-SBFD symbol are available for transmitting the PUSCH in the plurality of slots, and symbols where the PUSCH is located in a first slot of the plurality of slots comprise a non-SBFD symbol,
in a case where an uplink resource corresponding to the non-SBFD symbol is greater than or equal to a first frequency domain resource configured for the PUSCH, determining a fifth frequency domain resource in the uplink resource and sending the PUSCH with the fifth frequency domain resource in the first slot, wherein a bandwidth of the fifth frequency domain resource is equal to a bandwidth of the first frequency domain resource; and/or
in a case where an uplink resource corresponding to the non-SBFD symbol is smaller than a first frequency domain resource configured for the PUSCH, not sending the PUSCH in the first slot.

16. The method of any one of claims 1 to 8, further comprising:
in a case where it is determined that only the SBFD symbol is available for transmitting the PUSCH in the plurality of slots, and where there is an overlapping second frequency domain resource between a first frequency domain resource configured for the PUSCH in a first slot of the plurality of slots and an uplink resource corresponding to the SBFD symbol,
in a case where symbols occupied by the PUSCH in the first slot comprise a non-SBFD symbol, not sending the PUSCH in the first slot; and/or
in a case where symbols occupied by the PUSCH in the first slot comprise an SBFD symbol and do not comprise any downlink symbol, sending the PUSCH with the overlapping second frequency domain resource in the first lot; and/or
in a case where symbols occupied by the PUSCH in the first slot only comprise an SBFD symbol, sending the PUSCH with the overlapping second frequency domain resource in the first slot.

17. The method of any one of claims 1 to 8, further comprising:
in a case where it is determined that only the non-SBFD symbol is available for transmitting the PUSCH in the plurality of slots,
in a case where symbols occupied by the PUSCH in a first slot of the plurality of slots comprise an SBFD symbol, not sending the PUSCH in the first slot; and/or
in a case where symbols occupied by the PUSCH in a first slot comprise an uplink symbol and/or a flexible symbol and do not comprise any downlink symbol, sending the PUSCH in the first slot; and/or
in a case where symbols occupied by the PUSCH in a first slot only comprise an uplink symbol and/or a flexible symbol, sending the PUSCH in the first slot.

18. The method of any one of claims 1 to 15, further comprising:
in a case where symbols occupied by the PUSCH in a first slot of the plurality of slots comprise a downlink symbol, not sending the PUSCH in the first slot.

19. A method for indicating transmission, performed by a network device, the method comprising:
sending first information to a terminal, wherein the first information indicates a symbol available for sending by the terminal a physical uplink shared channel (PUSCH) in a plurality of slots, and the symbol comprises at least one of a subband full-duplex (SBFD) symbol or a non-SBFD symbol.

20. The method of claim 19, wherein the first information comprises at least one of:
frequency domain resource information; or
an indication field.

21. The method of claim 20, wherein in a case where it is determined that a symbol available for receiving the PUSCH sent by the terminal in the plurality of slots comprises the SBFD symbol and the non-SBFD symbol, a frequency domain resource configured for the PUSCH by the frequency domain resource information is within an uplink resource corresponding to the SBFD symbol; and/or
in a case where it is determined that the symbol available for receiving the PUSCH sent by the terminal in the plurality of slots comprises the SBFD symbol or the non-SBFD , a frequency domain resource configured for the PUSCH by the frequency domain resource information comprises a frequency domain resource other than an uplink resource corresponding to the SBFD symbol.

22. The method of claim 20, in a case where it is determined that the symbol available for receiving the PUSCH sent by the terminal in the plurality of slots comprises the SBFD symbol and the non-SBFD symbol, a frequency domain resource configured for the PUSCH by the frequency domain resource information comprises a frequency domain resource for sending the PUSCH in the SBFD symbol and a frequency domain resource for sending the PUSCH in the non-SBFD symbol.

23. The method of claim 20, wherein the indication field occupies 1 bit or 2 bits.

24. The method of claim 23, wherein in a case where it is determined that the symbol available for receiving the PUSCH sent by the terminal in the plurality of slots comprises the SBFD symbol and the non-SBFD symbol, the indication field indicates that the SBFD symbol and the non-SBFD symbol are available for sending the PUSCH by the terminal in the plurality of slots; and/or
in a case where it is determined that the symbol available for receiving the PUSCH sent by the terminal in the plurality of slots comprises the SBFD symbol or the non-SBFD symbol, the indication field indicates that the SBFD symbol or the non-SBFD symbol is available for sending the PUSCH by the terminal in the plurality of slots.

25. The method of claim 23, wherein in a case where it is determined that the symbol available for receiving the PUSCH sent by the terminal in the plurality of slots only comprises the SBFD symbol, the indication field indicates that only the SBFD symbol is available for sending the PUSCH by the terminal in the plurality of slots; and/or
in a case where it is determined that the symbol available for receiving the PUSCH sent by the terminal in the plurality of slots only comprises the non-SBFD symbol, the indication field indicates that only the non-SBFD symbol is available for sending the PUSCH by the terminal in the plurality of slots; and/or
in a case where it is determined that the symbol available for receiving the PUSCH sent by the terminal in the plurality of slots comprises the SBFD symbol and the non-SBFD symbol, the indication field is empty.

26. The method of claim 23, where in a case where it is determined that the symbol available for receiving the PUSCH sent by the terminal in the plurality of slots comprises the SBFD symbol and the non-SBFD symbol, the indication field indicates that the SBFD symbol and the non-SBFD symbol are available for sending the PUSCH by the terminal in the plurality of slots; and/or
in a case where it is determined that the symbol available for receiving the PUSCH sent by the terminal in the plurality of slots only comprises the SBFD symbol, the indication field indicates that only the SBFD symbol is available for sending the PUSCH by the terminal in the plurality of slots; and/or
in a case where it is determined that the symbol available for receiving the PUSCH sent by the terminal in the plurality of slots comprises only the non-SBFD symbol, the indication field indicates that only the non-SBFD symbol is available for sending the PUSCH by the terminal in the plurality of slots.

27. The method of any one of claims 19 to 26, further comprising:
in a case where it is determined that the SBFD symbol and the non-SBFD symbol are available for receiving the PUSCH sent by the terminal in the plurality of slots, and where a first frequency domain resource configured for the PUSCH in a first slot of the plurality of slots is within an uplink resource corresponding to the SBFD symbol,
receiving the PUSCH sent by the terminal in the first slot.

28. The method of any one of claims 19 to 26, further comprising:
in a case where it is determined that the SBFD symbol and the non-SBFD symbol are available for receiving the PUSCH sent by the terminal in the plurality of slots, where symbols occupied by the PUSCH in a first slot of the plurality of slots comprise at least one SBFD symbol, and where a first frequency domain resource configured for the PUSCH in the first slot comprises a frequency domain resource other than an uplink resource corresponding to the SBFD symbol,
not receiving the PUSCH sent by the terminal in the first slot.

29. The method of any one of claims 19 to 26, further comprising:
in a case where it is determined that the SBFD symbol and the non-SBFD symbol are available for receiving the PUSCH sent by the terminal in the plurality of slots, where symbols occupied by the PUSCH in the plurality of slots comprise at least one SBFD symbol, and where there is an overlapping second frequency domain resource between a first frequency domain resource configured for the PUSCH and an uplink resource corresponding to the SBFD symbol in the plurality of slots,
receiving the PUSCH sent by the terminal with the overlapping second frequency domain resource in the plurality of slots.

30. The method of any one of claims 19 to 26, further comprising:
in a case where it is determined that the SBFD symbol and the non-SBFD symbol are available for receiving the PUSCH sent by the terminal in the plurality of slots, where symbols occupied by the PUSCH in the plurality of slots comprise at least one SBFD symbol, and where there is an overlapping second frequency domain resource between a first frequency domain resource configured for the PUSCH and an uplink resource corresponding to the SBFD symbol in the plurality of slots,
receiving the PUSCH sent by the terminal with the overlapping second frequency domain resource in the SBFD symbol in a first slot of the plurality of slots and receiving the PUSCH sent by the terminal with the first frequency domain resource in the non-SBFD symbol in the first slot.

31. The method of any one of claims 19 to 26, further comprising:
in a case where it is determined that the SBFD symbol and the non-SBFD symbol are available for receiving the PUSCH sent by the terminal in the plurality of slots, and where symbols occupied by the PUSCH in the plurality of slots comprise at least one SBFD symbol,
in a case where symbols occupied by the PUSCH in a first slot of the plurality of slots do not comprise any SBFD symbol, receiving the PUSCH sent by the terminal with a first frequency domain resources configured for the PUSCH in the first slot, and/or in a case where symbols occupied by the PUSCH in a first slot of the plurality of slots comprise an SBFD symbol, receiving the PUSCH sent by the terminal with an overlapping second frequency domain resource between a first frequency domain resource configured for the PUSCH and an uplink resource corresponding to the SBFD symbols in the first slot.

32. The method of any one of claims 19 to 26, further comprising:
in a case where it is determined that the SBFD symbol and the non-SBFD symbol are available for receiving the PUSCH sent by the terminal in the plurality of slots, and where a third frequency domain resource for sending the PUSCH in the SBFD symbol is configured and a fourth frequency domain resource for sending the PUSCH in the non-SBFD symbol is configured,
receiving the PUSCH sent by the terminal with the third frequency domain resource in the SBFD symbol, and receiving the PUSCH sent by the terminal with the fourth frequency domain resource in the non-SBFD symbol.

33. The method of any one of claims 19 to 26, further comprising:
in a case where it is determined that the SBFD symbol and the non-SBFD symbol are available for receiving the PUSCH sent by the terminal in the plurality of slots, and where symbols where the PUSCH is located in a first slot of the plurality of slots comprise a non-SBFD symbol,
in a case where an uplink resource corresponding to the non-SBFD symbol is greater than or equal to a first frequency domain resource configured for the PUSCH, determining a fifth frequency domain resource in the uplink resource and receiving the PUSCH sent by the terminal with the fifth frequency domain resource in the first slot, wherein a bandwidth of the fifth frequency domain resource is equal to a bandwidth of the first frequency domain resource; and/or
in a case where an uplink resource corresponding to the non-SBFD symbol is smaller than a first frequency domain resource configured for the PUSCH, not receiving the PUSCH sent by the terminal in the first slot.

34. The method of any one of claims 19 to 26, further comprising:
in a case where it is determined that only the SBFD symbol is available for receiving the PUSCH sent by the terminal in the plurality of slots, and where there is an overlapping second frequency domain resource between a first frequency domain resource configured for the PUSCH in a first slot of the plurality of slots and an uplink resource corresponding to the SBFD symbol,
in a case where symbols occupied by the PUSCH in the first slot comprise a non-SBFD symbol, not receiving the PUSCH sent by the terminal in the first slot; and/or
in a case where symbols occupied by the PUSCH in the first slot comprise an SBFD symbol and do not comprise any downlink symbol, receiving the PUSCH sent by the terminal with the overlapping second frequency domain resource in the first slot; and/or
in a case where symbols occupied by the PUSCH in the first slot only comprise an SBFD symbol, receiving the PUSCH sent by the terminal with the overlapping second frequency domain resource in the first slot.

35. The method of any one of claims 19 to 26, further comprising:
in a case where it is determined that only the non-SBFD symbol is available for receiving the PUSCH sent by the terminal in the plurality of slots,
in a case where symbols occupied by the PUSCH in a first slot of the plurality of slots comprise an SBFD symbol, not receiving the PUSCH sent by the terminal in the first slot; and/or
in a case where symbols occupied by the PUSCH in a first slot comprise an uplink symbol and/or a flexible symbol and do not comprise any downlink symbol, receiving the PUSCH sent by the terminal in the first slot; and/or
in a case where symbols occupied by the PUSCH in a first slot only comprise an uplink symbol and/or a flexible symbol, receiving the PUSCH sent by the terminal in the first slot.

36. The method of any one of claims 19 to 35, further comprising:
in a case where symbols occupied by the PUSCH in a first slot of the plurality of slots comprise a downlink symbol, not receiving the PUSCH sent by the terminal in the first slot.

37. An apparatus for indicating transmission, configured in a terminal, the apparatus comprises:
a processing module, configured to determine a symbol available for transmitting a physical uplink shared channel (PUSCH) in a plurality of slots based on first information sent by a network device, wherein the symbol comprises at least one of a subband full-duplex (SBFD) symbol or a non-SBFD symbol.

38. An apparatus for indicating transmission, configured in a network device, the apparatus comprising:
a sending module, configured to send first information to a terminal, wherein the first information indicates a symbol available for transmitting a physical uplink shared channel (PUSCH) in a plurality of slots, and the symbol comprises at least one of: a subband full-duplex (SBFD) symbol or a non-SBFD symbol.

39. A communication system, comprising a terminal and a network device, wherein the terminal is configured to implement the method for determining transmission of any one of claims 1 to 18, and the network device is configured to implement the method for indicating transmission of any one of claims 19 to 36.

40. A communication device, comprising:
a processor, and
a memory for storing a computer program;
wherein when the computer program is executed by a processor, the method for determining transmission of any one of claims 1 to 18 is implemented.

41. A communication device, comprising:
a processor, and
a memory for storing a computer program;
wherein when the computer program is executed by a processor, the method for indicating transmission of any one of claims 19 to 36 is implemented.

42. A computer-readable storage medium, having a computer program stored therein, wherein when the computer program is executed by a processor, the method for determining transmission of any one of claims 1 to 18 is implemented.

43. A computer-readable storage medium, having a computer program stored therein, wherein when the computer program is executed by a processor, the method for indicating transmission of any one of claims 19 to 36 is implemented.
